# EUROPÄISCHE PATENTANMELDUNG

(11) **EP 3 355 235 A1**
(43) Veröffentlichungstag der Anmeldung: **01.08.2018**
(21) Anmeldenummer: 17001505.1
(22) Anmeldetag: 05.09.2017
(51) Int. Cl.: G06K 7/08, G06K 19/067, G06K 19/077

(54) **VORRICHTUNG UND VERWENDUNG DER VORRICHTUNG ZUR ERZEUGUNG EINES VERÄNDERBAREN ZEITABHÄNGIGEN SIGNALS AUF EINEM KAPAZITIVEN FLÄCHENSENSOR, SOWIE ELEKTRISCH LEITFÄHIGE STRUKTUR**

(30) Priorität: 31.01.2017 EP 17000166
(71) Anmelder: Prismade Labs GmbH, 09116 Chemnitz (DE)
(72) Erfinder: Weigelt, Karin, 09112 Chemnitz (DE); Thiele, Jan, 09224 Chemnitz / Güna (DE)
(74) Vertreter: Hummel, Horst

(57) **Zusammenfassung**

Die Erfindung betrifft eine Vorrichtung und ihre Verwendung zur Erzeugung eines zeitabhängigen Signals auf einem kapazitiven Flächensensor, sowie eine elektrisch leitfähige Struktur für eine solche Vorrichtung.

## Beschreibung

Die Erfindung betrifft eine Vorrichtung zur Erzeugung eines veränderbaren zeitabhängigen Signals auf einem kapazitiven Flächensensor. In weiteren Aspekten betrifft die Erfindung eine Verwendung der Vorrichtung und eine elektrisch leitfähige Struktur für die Vorrichtung.

Im Stand der Technik sind elektrisch leitfähige Strukturen auf Datenträgern bekannt, die oftmals auf eine spezielle Anordnung der Elemente der leitfähigen Struktur beschränkt sind oder die nach bestimmten Regeln strukturiert sein müssen, um von einem Lesegerät, zum Beispiel einem Flächensensor, erkannt und/oder ausgelesen zu werden. Insbesondere können diese elektrisch leitfähigen Strukturen üblicherweise genau ein bestimmtes Signal auf dem Lesegerät auslösen, da die elektrisch leitfähige Struktur in Bezug auf ihre räumliche Gestalt unveränderbar ist und daher vom Lesegerät stets als dieselbe Struktur erkannt wird. Das Lesegerät wird daher der stets gleichen Struktur dasselbe elektrische Signal zuordnen, wenn es über ein integriertes Datenverarbeitungssystem verfügt.

Um die Einsatzmöglichkeiten für Systeme aus Datenträgern mit elektrisch leitfähigen Strukturen und Flächensensoren zu vergrößern und ihren Einsatz flexibler zu gestalten, ist es Aufgabe der vorliegenden Erfindung, eine Vorrichtung und eine elektrisch leitfähige Struktur bereitzustellen, mit der veränderliche Signale auf einem Lesegerät hervorgerufen werden können, ohne einen anderen Datenträger mit einer anderen elektrisch leitfähigen Struktur zu verwenden.

### Beschreibung

Gelöst wird die Aufgabe durch die Merkmale des Anspruchs 1. Vorteilhafte Ausgestaltungen der Erfindung sind in den abhängigen Ansprüchen beschrieben. Erfindungsgemäß ist eine Vorrichtung zur Erzeugung eines veränderbaren zeitabhängigen Signals auf einem kapazitiven Flächensensor vorgesehen, die mindestens eine elektrisch leitfähige Struktur umfasst. Die Vorrichtung ist dadurch gekennzeichnet, dass die elektrisch leitfähige Grundstruktur dazu eingerichtet ist, ein erstes Signal auf dem Flächensensor zu erzeugen, und dass durch eine nachträgliche Veränderung der elektrisch leitfähigen Grundstruktur eine zweite elektrisch leitfähige Struktur erhalten wird, die dazu eingerichtet ist, ein zweites Signal auf dem Flächensensor zu erzeugen, wobei sich das erste Signal und das zweite Signal in ihrer Wirkung auf dem Flächensensor unterscheiden, wobei die Erzeugung des zeitabhängigen Signals auf dem kapazitiven Flächensensor durch Modulation einer dynamischen Eingabe durch die elektrisch leitfähige Struktur der Vorrichtung erfolgt.

Der Flächensensor kann beispielsweise von einem Berührungsbildschirm gebildet werden, wie er beispielsweise bei neueren Mobiltelefonen ab 2007 oder bei Tablet-PCs verwendet wird. Es kann für einzelne Anwendungen aber auch bevorzugt sein, dass der Flächensensor beispielsweise Bestandteil eines festinstallierten Datenverarbeitungssystems ist, beispielsweise eines Informationssystems an einem touristisch interessanten Ort. Es kann ferner bevorzugt sein, dass der Flächensensor Bestandteil eines speziellen Lesegeräts ist, das beispielsweise auf die Vorrichtung abgestimmt sein kann. Der Flächensensor ist vorzugsweise dazu eingerichtet, elektrische Signale zu erkennen, die beispielsweise dann entstehen, wenn eine elektrisch leitfähige Struktur mit einem Flächensensor in einem Wirkkontakt steht und ein Nutzer eine dynamische Eingabe auf der elektrisch leitfähigen Struktur, die bevorzugt auf der Vorrichtung angeordnet vorliegt, vornimmt. Diese dynamische Eingabe kann zum Beispiel von einer Bewegung des Nutzers auf der Vorrichtung erfolgen, wodurch die elektrisch leitfähige Struktur ganz oder teilweise berührt wird. Es ist im Sinne der Erfindung insbesondere bevorzugt, eine Relativbewegung zwischen einem Eingabemittel und der Vorrichtung als dynamische Eingabe zu bezeichnen, wobei als Eingabemittel beispielsweise ein Körperteil eines Nutzers oder ein speziell dafür vorgesehener Stift verwendet werden kann.

Es kann im Sinne der Erfindung bevorzugt sein, dass die elektrisch leitfähige Struktur Einzelelemente umfasst und dass durch die dynamische Eingabe zu unterschiedlichen Zeitpunkten tᵢ unterschiedliche Einzelelemente berührt werden, beispielsweise dadurch, dass die dynamische Eingabe von einer Wisch- oder linienförmigen Bewegung des Nutzerfingers vorgenommen wird, mit der der Nutzer über die Vorrichtung, das heißt insbesondere die elektrisch leitfähige Struktur hinwegstreicht.

Die Vorrichtung kann beispielsweise von einer Karte gebildet werden. Beispielsweise kann die Karte aus Kunststoff, Karton und/oder Papier bestehen und die elektrisch leitfähige Struktur aufweisen. Die Karte kann beispielsweise die Form und Abmessungen einer Geldkarte oder einer anderen Chipkarte aufweisen. Die elektrisch leitfähige Struktur kann vorzugsweise auch auf einer Verpackung angeordnet vorliegen, wobei die Verpackung beispielsweise in einer zusammengelegten Form (zusammengefaltete Pappschachtel) oder in einer 3D-Form (Verpackung gefüllt mit einem Produkt) vorliegen. Es ist im Sinne der Erfindung bevorzugt, dass die Formulierung "elektrisch leitfähige Struktur" als Oberbegriff für die elektrisch leitfähige Grundstruktur und die zweite elektrisch leitfähige Struktur verwendet wird. Die elektrisch leitfähige Grundstruktur wird vorzugsweise auch als Grundstruktur oder erste elektrisch leitfähige Struktur bezeichnet. Die zweite elektrisch leitfähige Struktur wird vorzugsweise auch als resultierende elektrisch leitfähige Struktur bezeichnet. Sie wird durch eine nachträgliche Veränderung aus der elektrisch leitfähigen Grundstruktur erzeugt.

Es ist im Sinne der Erfindung ganz besonders bevorzugt, dass die nachträgliche Veränderung der elektrisch leitfähigen Grundstruktur realisiert wird durch eine oder mehrere der folgenden Maßnahmen:
a) nachträgliches selektives und/oder lokales Auftragen von elektrisch leitfähigem Material,
b) nachträgliches selektives und/oder lokales Entfernen von elektrisch leitfähigem Material,
c) nachträgliche Kombination von mindestens zwei elektrisch leitfähigen Grundstrukturen miteinander,
d) nachträgliches Teilen/Trennen der elektrisch leitfähigen Grundstruktur und/oder
e) nachträgliche Dimensionsveränderung der elektrisch leitfähigen Grundstruktur.

Durch eine oder mehrere dieser Maßnahmen wird vorzugsweise die zweite elektrisch leitfähige Struktur erhalten. Bei diesen Maßnahmen es ist möglich, dass die zweite elektrisch leitfähige Struktur erzeugt wird, indem die bestehende Grundstruktur selbst nicht verändert wird, sondern dass zum Beispiel Material zusätzlich zu der Grundstruktur hinzugefügt wird. Es ist dann im Sinne der Erfindung bevorzugt, die frühere, unveränderte Grundstruktur zusammen mit dem hinzugefügten Material als zweite elektrisch leitfähige Struktur zu bezeichnen, wobei die nachträglich Veränderung der Grundstruktur in dem Hinzufügen des zusätzlichen Materials besteht. Dieses zusätzliche Material kann bevorzugt elektrisch leitfähiges Material sein.

Es kann im Sinne der Erfindung ebenso bevorzugt sein, dass eine nachträgliche Veränderung in einer tatsächlichen physischen Veränderung der Grundstruktur besteht, beispielsweise indem Material aus der Grundstruktur entfernt wird oder die Grundstruktur durchtrennt wird. Im ersten Fall wird die zweite elektrisch leitfähige Struktur bevorzugt von der veränderten Grundstruktur gebildet, von der zumindest lokal Material entfernt wurde. Im zweiten Fall besteht die zweite elektrisch leitfähige Struktur bevorzugt auf den beiden elektrisch leitfähigen Strukturen, die vor dem Trennen die elektrisch leitfähige Grundstruktur bildeten. Es ist im Sinne der Erfindung insbesondere bevorzugt, dass die Maßnahmen zur Vornahme einer nachträglichen Veränderung einzeln ausgeführt werden können und auf diese Weise eine zweite elektrisch leitfähige Struktur erhalten wird. Es kann aber ebenso bevorzugt sein, zwei oder mehrere Maßnahmen miteinander zu kombinieren, beispielsweise indem sie nacheinander ausgeführt werden.

Die elektrisch leitfähige Grundstruktur ist dazu eingerichtet, ein erstes Signal auf dem Flächensensor zu erzeugen und die zweite elektrisch leitfähige Struktur ist dazu eingerichtet, ein zweites Signal auf dem Flächensensor zu erzeugen, wobei sich das erste Signal und das zweite Signal in ihrer Wirkung auf dem Flächensensor unterscheiden. Die unterschiedlichen elektrisch leitfähigen Strukturen erzeugen unterschiedliche Signale auf dem Flächensensor, wobei die Abfolge dieser Signale einen Aspekt des veränderbaren zeitabhängigen Signals im Sinne der vorliegenden Erfindung bildet.

Es ist bevorzugt, dass zu einem Zeitpunkt t1 eine erfindungsgemäße Vorrichtung mit einer elektrisch leitfähigen Grundstruktur vorliegt. Diese bewirkt auf einem Flächensensor ein erstes Signal. Zu einem Zeitpunkt t2, der bei einem chronologischen Ablauf der Zeit bevorzugt nach dem ersten Zeitpunkt t1 liegt, weist die Vorrichtung eine zweite elektrisch leitfähige Struktur auf. Diese bewirkt auf dem Flächensensor bevorzugt ein zweites Signal, das aufgrund der nachträglichen Veränderung der Vorrichtung nicht identisch ist mit dem ersten Signal, das mit der Vorrichtung, die die Grundstruktur aufweist, erhalten wurde. Die unterschiedlichen Signale stellen bevorzugt jeweils eine Abfolge von Signalen dar, die im Sinne der Erfindung als veränderbares zeitabhängiges Signal bezeichnet wird. Es ist ferner bevorzugt, dass sich die Signale, die bevorzugt die Signalabfolge bilden, aufgrund der nachträglichen Veränderung der Vorrichtung mit der Zeit ändern. Die zeitliche Veränderbarkeit des Signals wird insbesondere dadurch erreicht, dass die unterschiedlichen ersten und zweiten Signale, die vorzugsweise das veränderbare zeitabhängige Signal bilden, von unterschiedlichen elektrisch leitfähigen Strukturen hervorgerufen werden, wobei die unterschiedlichen elektrisch leitfähigen Strukturen zu unterschiedlichen Zeitpunkten auf der erfindungsgemäßen Vorrichtung vorliegen. Dies ist vorzugsweise darauf zurückzuführen, dass die Durchführung der Maßnahme, die zur nachträglichen Veränderung der Vorrichtung führt, vorzugsweise eine kurze Zeitspanne Δt in Anspruch nimmt, die bevorzugt den Zeitunterschied zwischen t1 und t2 bildet. Es ist im Sinne der Erfindung bevorzugt, dass sich ein veränderbares zeitabhängiges Signal im Laufe der Zeit von sich selbst oder durch eine Einwirkung von außen verändert. Vorzugsweise kann das veränderbare zeitabhängige Signal auch als zeitabhängiges oder zeitlich veränderliches Signal bezeichnet werden.

Ein zweiter Aspekt des veränderbaren zeitabhängigen Signals wird durch die Modulation einer dynamischen Eingabe durch die Vorrichtung erreicht. Eine dynamische Eingabe ist im Sinne der Erfindung beispielsweise eine Bewegung, die ein Nutzer ausführt. Es ist im Stand der Technik beispielsweise bekannt, dass ein Nutzer mit einer Wisch-Bewegung ein Mobiltelefon entsperren kann oder dass mit weiteren Wisch- oder Schiebbewegungen Anwendungen (Applikationen oder "Apps") auf dem Bildschirm eines Mobiltelefons verschoben werden können. Diesen konventionellen Bewegungen ist gemein, dass sie vom Bildschirm des Mobiltelefons, das beispielsweise auch ein Flächensensor im Sinne der Erfindung darstellt, an der Stelle detektiert werden, an der sie vorgenommen werden. Wenn ein Nutzer beispielsweise eine Wischbewegung von links nach rechts mittig auf dem Bildschirm eines Mobiltelefons vornimmt, so detektiert der Touch-Controller des Berührungsbildschirms des Mobiltelefons diese Bewegung üblicherweise genau entlang des Wegs der Bewegung, die beispielsweise der Finger des Nutzers auf dem Bildschirm ausführt.

Mit der vorliegenden Erfindung wird es nunmehr überraschenderweise ermöglicht, eine Vorrichtung und eine Verfahren bereitzustellen, mit der/dem eine solche dynamische Eingabe eines Nutzers vom Flächensensor an einem anderen Ort oder auf eine andere Weise detektiert wird. Die Vorrichtung ermöglicht es beispielsweise, eine beispielsweise linienförmige dynamische Eingabe des Nutzers so zu verändern, dass sie vom Flächensensor als Wellenlinie erkannt wird. Dies wird vorzugsweise durch die Ausgestaltung der elektrisch leitfähigen Struktur auf der Vorrichtung erreicht. Beispielsweise kann das bevorzugt kartenähnliche Objekt, das vorzugsweise die Vorrichtung bildet, eine elektrisch leitfähige Struktur aufweisen, die eine Vielzahl von Einzelelementen umfasst. Es ist im Sinne der Erfindung bevorzugt, dass die Anordnung der Einzelelemente das zeitlich veränderliche Signal, das vom Flächensensor detektiert wird, festgelegt, wobei die Detektion durch den Flächensensor bevorzugt dann erfolgt, wenn ein Nutzer eine Bewegung auf der Vorrichtung, insbesondere der elektrisch leitfähigen Struktur auf der Vorrichtung, ausführt.

Im Kontext der vorliegenden Erfindung wird das zeitlich veränderliche Signal durch die Anordnung der Einzelelemente auf der Vorrichtung festgelegt. Es ist im Sinne der Erfindung bevorzugt, dass die elektrisch leitfähige Struktur mindestens zwei Einzelelemente umfasst. Es kann aber für einige Anwendungen der Erfindung bevorzugt sein, dass die elektrisch leitfähige Struktur eine größere Zahl von Einzelelementen umfasst. Es ist insbesondere bevorzugt, wenn die Vorrichtung bei ihrer Verwendung auf einen Flächensensor aufgelegt wird. Dadurch wird vorzugsweise ein Wirkkontakt zwischen dem Flächensensor und der Vorrichtung, insbesondere ihrer elektrisch leitfähigen Struktur, erzeugt. Wenn der Nutzer beispielsweise mit seinem Finger auf der Vorrichtung eine gerade linienförmige Bewegung ausführt, so wird die elektrisch leitfähige Struktur durch die Berührung auf ein elektrisches Potential gesetzt, das anders ist als das elektrische Potential der elektrisch leitfähigen Struktur ohne Berührung. Diese Potentialänderung kann vom Flächensensor erkannt werden. Es ist im Sinne der Erfindung insbesondere bevorzugt, dass die Einzelelemente der elektrisch leitfähigen Struktur auf ein einheitliches elektrisches Potential gesetzt werden. Insbesondere werden die Einzelelemente der elektrisch leitfähigen Struktur auf ein einheitliches elektrisches Potential gesetzt, die von der Berührung des Fingers erfasst werden. Es ist im Sinne der Erfindung bevorzugt, dass die Menge der Berührungen, die bei einer Bewegung des Fingers oder eines anderen Körperteils eines Nutzers erzeugt werden, als dynamische Eingabe im Sinne der Erfindung bezeichnet wird.

Wenn die elektrisch leitfähige Struktur selbst nicht nur strichförmig ausgebildet ist, sondern beispielsweise aus länglichen Einzelelementen besteht, die nebeneinander um eine virtuelle Linie herum angeordnet vorliegen, wobei die Bestandteile der Einzelelemente rechts und links von der gedachten Linie unterschiedlich große Flächen abdecken oder ein unterschiedliches Volumen elektrisch leitfähiges Material umfassen, so kann die zunächst linienförmige Bewegung des Nutzers, das heißt seine dynamische Eingabe, vom Flächensensor durch die Ausgestaltung der elektrisch leitfähigen Struktur verzerrt detektiert werden. Diese mögliche Verzerrung einer dynamischen Eingabe durch die Ausgestaltung der elektrisch leitfähigen Struktur auf der Vorrichtung wird im Sinne der Erfindung als Modulation der dynamischen Eingabe durch die elektrisch leitfähige Struktur bezeichnet.

Die elektrisch leitfähige Struktur wird vorzugsweise zu einem Zeitpunkt t1 von einer ersten elektrisch leitfähigen Struktur gebildet ("Grundstruktur") und zu einem Zeitpunkt t2 von einer zweiten elektrisch leitfähige Struktur. Der Unterschied zwischen den elektrisch leitfähigen Strukturen besteht in einer nachträglichen Veränderung, mit der die erste Struktur in die zweite Struktur überführt werden kann, wobei die erste und die zweite elektrisch leitfähige Struktur jeweils unterschiedliche elektrische Signale auf dem Flächensensor hervorrufen. Dies geschieht vorzugsweise dann, wenn die Vorrichtung, auf der die elektrisch leitfähigen Strukturen angeordnet vorliegen, mit einem Flächensensor im Wirkkontakt steht. Es ist im Sinne der Erfindung besonders bevorzugt, dass das erste und das zweite elektrisch leitfähige Signal die dynamische Eingabe des Nutzers unterschiedlich modulieren, das heißt beispielsweise verzerren. Das kann zum Beispiel dadurch geschehen, dass im Rahmen der nachträglichen Veränderung Material aus der elektrisch leitfähigen Struktur entfernt wird. In dem Ausführungsbeispiel, in dem eine gedachte Linie, auf der die dynamische Eingabe eines Nutzers erfolgt, eine elektrisch leitfähige Struktur virtuell in eine rechte und eine linke Hälfte teilt, kann es beispielsweise bevorzugt sein, dass auf der einen Seite der elektrisch leitfähigen Struktur mehr von dem elektrisch leitfähigen Material, das vorzugsweise die elektrisch leitfähige Struktur bildet, entfernt wird als von der anderen Seite. Dadurch wird vorzugsweise von der zweiten elektrischen Struktur eine andere Verzerrung, das heißt Modulation, hervorgerufen, als von der ersten elektrisch leitfähigen Struktur. Die unterschiedlichen Modulationen rufen demnach bevorzugt unterschiedliche elektrische Signale auf dem Flächensensor hervor, wobei die Abfolge oder Menge an elektrischen Signalen vorzugsweise das veränderbare zeitabhängige Signal im Sinne der Erfindung bilden. Dieses veränderbare zeitabhängige Signal wird vorzugsweise durch die veränderte Modulation der dynamischen Eingabe erzeugt, die durch die nachträgliche Veränderung der elektrisch leitfähigen Struktur hervorgerufen wird, und/oder durch die Dynamik der Eingabe selbst, das heißt bevorzugt dadurch, dass die dynamische Eingabe bevorzugt von einer Bewegung als Abfolge von Berührungen einer elektrisch leitfähigen Struktur, insbesondere ihrer Einzelelemente, gebildet wird. Es war vollkommen überraschend, dass diese Merkmale in ihrem Zusammenwirken zur Erzeugung eines veränderbaren zeitabhängigen Signals verwendet werden können und dass durch die Vorsehung dieser Merkmale eine Vorrichtung bereitgestellt werden kann, mit der ein veränderbares zeitabhängiges Signal erzeugt werden kann.

In einem weiteren Aspekt betrifft die Erfindung ein Verfahren zu Erzeugung eines veränderbaren zeitabhängigen Signals durch eine Vorrichtung mit einer elektrisch leitfähigen Struktur umfassend die folgenden Schritte
a) Bereitstellung einer Vorrichtung mit einer elektrisch leitfähigen Grundstruktur
b) Erzeugung eines ersten elektrischen Signals auf einem Flächensensor
c) Nachträgliche Veränderung der Vorrichtung, insbesondere der elektrisch leitfähigen Grundstruktur, wodurch eine zweite elektrisch leitfähige Struktur erhalten wird,
d) Erzeugung eines zweiten elektrischen Signals auf einem Flächensensor.

In einer Ausführungsform des Verfahrens ist es bevorzugt, dass zwischen der Vorrichtung und dem Flächensensor ein Wirkkontakt besteht, beispielsweise dadurch, dass die Vorrichtung auf den Flächensensor aufgelegt wird. Es ist ferner bevorzugt, dass ein Nutzer eine dynamische Eingabe vornimmt, die vorzugsweise in einer Bewegung auf der Vorrichtung besteht. Es ist bevorzugt, dass die Wirkung der dynamischen Eingabe, die vom Flächensensor erkannt wird, beispielsweise in ihrer Form, nicht der ursprünglichen Form der dynamischen Eingabe entspricht, sondern dass die Eingabe durch die Vorrichtung, die beispielsweise zwischen Nutzerfinger und Flächensensor angeordnet vorliegt, verzerrt wird. Dies geschieht in einer besonders bevorzugten Ausführungsform der Erfindung durch die elektrisch leitfähige Struktur auf der Vorrichtung, die bevorzugt von zwei oder mehr Einzelelementen gebildet wird. Je nach Ausgestaltung der elektrisch leitfähigen Struktur, das heißt insbesondere der Anordnung und Ausgestaltung der Einzelelemente der Struktur, wird die dynamische Eingabe schwächer oder stärker verzerrt, wobei diese Verzerrung im Sinne der Erfindung als Modulation bezeichnet wird. Das zuvor beschriebene Verfahren kann in einer bevorzugten Ausführungsform wie folgt beschrieben werden:
a) Bereitstellung einer Vorrichtung mit einer elektrisch leitfähigen Grundstruktur
   a1) Herstellung eines Wirkkontakts zwischen einem Flächensensor und der Vorrichtung
   a2) Vornahme einer dynamischen Eingabe durch einen Nutzer auf der Vorrichtung
   a3) Modulation der dynamischen Eingabe durch die elektrisch leitfähige Grundstruktur auf der Vorrichtung
b) Erzeugung eines ersten elektrischen Signals auf dem Flächensensor
c) Nachträgliche Veränderung der Vorrichtung, insbesondere der elektrisch leitfähigen Grundstruktur, wodurch eine zweite elektrisch leitfähige Struktur erhalten wird,
   c1) Herstellung eines Wirkkontakts zwischen einem Flächensensor und der Vorrichtung
   c2) Vornahme einer dynamischen Eingabe durch einen Nutzer auf der Vorrichtung
   c3) Modulation der dynamischen Eingabe durch die zweite elektrisch leitfähige Struktur auf der Vorrichtung
d) Erzeugung eines zweiten elektrischen Signals auf einem Flächensensor

Es ist im Sinne der Erfindung besonders bevorzugt, dass die elektrischen Signale auf dem Flächensensor gemäß der Schritte b) und d) in dieser bevorzugten Ausführungsform der Erfindung durch die drei vorgehenden Teilschritte erzeugt werden.

Für verschiedene Anwendungen kann es im Sinne der Erfindung auch bevorzugt sein, dass die Vorrichtung mehr als eine elektrisch leitfähige Struktur umfasst. Diese können beispielsweise parallel zueinander oder um einen Winkel gegeneinander verdreht auf dem Objekt angeordnet vorliegen, wodurch sich komplexe Interaktionsmöglichkeiten zwischen den einzelnen elektrisch leitfähigen Strukturen ergeben können.

Es ist im Sinne der Erfindung bevorzugt, dass die Eingabe auf der Vorrichtung mit einem Eingabemittel erfolgt. Die Bewegung des Eingabemittels auf dem kartenähnlichen Objekt kann beispielsweise eine geradlinige Bewegung in Form eines Strichs sein. Eine solche strichförmige Bewegung würde von einem Flächensensor, wenn sie direkt auf dem berührungsempfindlichen Display ausgeführt würde, als strichförmige Eingabe erkannt. Wenn jedoch die strichförmige Bewegung auf einer erfindungsgemäßen Vorrichtung, das eine elektrisch leitfähige Struktur aufweist, ausgeführt wird, so "sieht" der Flächensensor eine Momentaufnahme, die durch die räumliche Ausgestaltung der elektrisch leitfähigen Struktur des kartenähnlichen Objekts verändert ist, das heißt in der Regel nicht mehr strichförmig sein wird, wenn nicht zufällig alle Elemente der elektrisch leitfähigen Struktur ausschließlich symmetrisch und/oder kongruent zueinander angeordnet vorliegen. Somit unterscheiden sich die tatsächliche Bewegung des Eingabemittels auf dem Objekt und die Wahrnehmung des kapazitiven Flächensensors von dieser Bewegung, wobei diese Umwandlung von der Vorrichtung durch die räumliche Anordnung der Bestandteile und/oder Elemente der elektrisch leitfähigen Struktur bewirkt wird und im Sinne der Erfindung bevorzugt als Modulation, Veränderung, Verzerrung oder Verschiebung bezeichnet wird. Es ist im Sinne der Erfindung bevorzugt, dass die Bewegung des Eingabemittels auf der Vorrichtung als dynamische Eingabe bezeichnet wird und die Wahrnehmung des Flächensensors, also das, was der Flächensensor von der Eingabe, moduliert durch das Objekt, erkennt, als elektrisches Signal. Es ist im Sinne der Erfindung bevorzugt, dass das Eingabemittel von einem Körperteil eines Nutzers, beispielsweise seinem Finger, gebildet wird. Es sind aber auch andere Eingabemittel, wie Stifte o.Ä. denkbar.

In einer Ausgestaltung der Erfindung ist es bevorzugt, dass ein Verlauf des zeitabhängigen Signals auf dem kapazitiven Flächensensor durch Anordnung, Größe, Abstand und/oder Form der Einzelelemente der elektrisch leitfähigen Struktur und/oder durch die Richtung und/oder Geschwindigkeit der dynamischen Eingabe bestimmbar ist. Das bedeutet im Sinne der Erfindung, dass insbesondere die Anordnung, Größe, Abstand und/oder Form der Einzelelemente der elektrisch leitfähigen Struktur die Modulation der dynamischen Eingabe bestimmen und das elektrische Signal auf dem Flächensensor beeinflussen.

Die Grundidee der vorliegenden Erfindung ist die nachträgliche Veränderung von elektrisch leitfähigen Strukturen auf Vorrichtungen und kartenähnlichen Objekten zur Erzeugung zeitabhängiger Signale auf einem Flächensensor. Zur nachträglichen Veränderung der Strukturen werden beispielsweise folgenden Möglichkeiten vorgeschlagen: Hinzufügen oder Entfernen von elektrisch leitfähigem Material, Kombination oder Teilen von elektrisch leitfähigen Strukturen oder Dimensionsänderung von elektrisch leitfähigen Strukturen. Die in der vorliegenden Anmeldung beschriebenen elektrisch leitfähigen Strukturen erzeugen spezifische zeitabhängige Signale auf einem kapazitiven Flächensensor, die durch eine dynamische Eingabe auf der Vorrichtung mit einem Eingabemittel, beispielsweise einem Finger oder Eingabestiften, initiiert wird. Mit der vorliegenden Erfindung wird es überraschenderweise ermöglicht, einfach oder mehrfach veränderbare kapazitive Speicher bereitzustellen.

Im einfachsten Fall wird die Vorrichtung, die in diesem Ausführungsbeispiel vorzugsweise als beschreibbarer und/oder veränderbarer kapazitiver Speicher bezeichnet wird, im wahrsten Sinne des Wortes mit einem Stift beschrieben und damit verändert. Die nachträgliche Veränderung im Sinne der Erfindung besteht in diesem Ausführungsbeispiel in dem Beschreiben mit einem Stift, wobei die Tinte, die von dem Stift abgegeben wird, zum Beispiel elektrisch leitfähiges Material umfassen kann, so dass durch das Beschreiben mit dem Stift zusätzliches elektrisch leitfähiges Material auf die Vorrichtung aufgetragen wird. Es ist im Sinne der Erfindung insbesondere bevorzugt, dass hierfür ein elektrisch leitfähiger Stift verwendet wird, womit im Sinne der Erfindung bevorzugt ein Stift bezeichnet wird, der elektrisch leitfähige Farbe und/oder Tinte umfasst und diese auf ein Substrat aufbringen und/oder übertragen kann. Insbesondere kann mit einem elektrisch leitfähigen Stift eine elektrisch leitfähige Struktur auf einem Substrat erzeugt und/oder modifiziert werden.

Erfindungsgemäß ist vorgesehen, eine Vorrichtung zur Erzeugung eines veränderbaren zeitabhängigen Signals auf einem kapazitiven Flächensensor bereitzustellen. Die auf der Vorrichtung vorliegende elektrisch leitfähige Struktur vor der Veränderung wird im Folgenden als Grundstruktur bezeichnet. Diese Grundstruktur umfasst vorzugsweise eine Vielzahl von Einzelelementen, die auf der Vorrichtung angeordnet vorliegen, wobei das zeitabhängige Signal durch die Anordnung der Einzelelemente auf dem kartenähnlichen Objekt festgelegt und durch eine Relativbewegung zwischen einem Eingabemittel und der Vorrichtung erzeugt wird. Dieses zeitabhängige Signal, welches durch die Grundstruktur bestimmt wird, wird im Folgenden als Referenzsignal bezeichnet.

Die Erfindung betrifft in einer bevorzugten Ausführungsform eine Vorrichtung zur Erzeugung eines veränderbaren zeitabhängigen Signals auf einem kapazitiven Flächensensor umfassend eine elektrisch leitfähige Grundstruktur, wobei eine nachträgliche Veränderung der elektrisch leitfähigen Grundstruktur durch
a) nachträgliches selektives und/oder lokales Auftragen von elektrisch leitfähigem Material,
b) nachträgliches selektives und/oder lokales Entfernen von elektrisch leitfähigem Material,
c) nachträgliche Kombination von mindestens zwei elektrisch leitfähigen Grundstrukturen miteinander,
d) nachträgliches Teilen der elektrisch leitfähigen Grundstruktur und/oder
e) nachträgliche Dimensionsveränderung der elektrisch leitfähigen Grundstruktur
realisiert wird, wobei durch die nachträgliche Veränderung der Grundstruktur eine elektrisch leitfähige Struktur auf der Vorrichtung erzeugt wird, die mit dem kapazitiven Flächensensor mindestens teilweise in einem Wirkkontakt steht, wobei die Erzeugung des zeitabhängigen Signals auf dem kapazitiven Flächensensor durch Modulation einer dynamischen Eingabe durch die elektrisch leitfähige Struktur der Vorrichtung erfolgt.

In einer bevorzugten Ausführungsform der Erfindung ist das zeitabhängige Signal von der Vorrichtung auf den kapazitiven Flächensensor übertragbar. Die Erzeugung des zeitabhängigen Signals auf dem kapazitiven Flächensensor erfolgt durch Modulation einer dynamischen Eingabe durch die Vorrichtung, insbesondere der elektrisch leitfähigen Struktur auf der Vorrichtung.

Im Sinne der Erfindung ist es bevorzugt, dass das zeitabhängige Signal durch eine Bewegung eines Eingabemittels auf der Vorrichtung hervorgerufen wird, die als dynamische Eingabe von der räumlichen Anordnung einer elektrisch leitfähigen Struktur auf der Vorrichtung moduliert, das heißt insbesondere verändert wird, so dass auf dem Flächensensor ein zeitlich veränderliches Signal entsteht, dass sich aus Momentaufnahmen der aktivierten Bereiche der elektrisch leitfähigen Struktur zusammensetzt, die durch die kurzzeitige Berührung mit dem Eingabemittel für kurze Zeit aktiviert werden, wobei die Menge der Kurzzeit-Berührungen der Bewegung des Eingabemittels entspricht. Ein Eingabemittel im Sinne der Erfindung ist vorzugsweise mindestens teilweise elektrisch leitfähig. Mögliche Eingabemittel umfassen Finger, Touch-Stifte, Bedienstifte für Touchscreens, Eingabestifte für Touchscreens, Stylus, Touchpen oder andere elektrisch leitfähige Objekte, die sich zur Eingabe auf kapazitiven Flächensensoren eignen ohne darauf beschränkt zu sein.

Nachträgliche Veränderungen von kapazitiven Speichern umfassen zum Beispiel die Modifikation, das Entwerten, das Aktivieren und/oder das Anpassen von kapazitiven Speichern, sowie jede Kombination davon. Generell weicht die Struktur, die durch diese Modifikation entsteht, von einer Grundstruktur ab, die zunächst auf einem Substrat erzeugt wird. Es im Sinne der Erfindung bevorzugt, eine Struktur, die zunächst auf dem einem Substrat erzeugt wird, als Grundstruktur zu bezeichnen, und die durch die Modifikation erhaltene Struktur als resultierende oder zweite elektrisch leitfähige Struktur. Es ist im Sinne der Erfindung bevorzugt, dass der räumliche Verlauf des zeitabhängigen Signals auf dem Display eines Flächensensors angezeigt werden kann.

Kapazitive Flächensensoren umfassen Berührungsbildschirme, Touchscreens und Touchsensoren, die vorzugsweise in einem elektronischen Gerät als Eingabeschnittstelle integriert sind, ohne darauf beschränkt zu sein. Vorzugsweise verfügt der kapazitive Flächensensor zusätzlich über Anzeigemöglichkeiten. Solche Komponenten stellen sowohl eine Eingabeschnittstelle als auch eine Ausgabeschnittstelle dar und sind in elektronischen Geräten, wie zum Beispiel Smartphones, Tablets, Laptops oder Computer eingebaut. Kapazitive Flächensensoren umfassen darüber hinaus auch eigenständige Geräte, welches als reine Eingabeschnittstelle fungieren.

Bei dem Substrat der Vorrichtung kann es sich vorzugsweise um ein kartenähnliches Objekt oder eine beispielsweise dreidimensionale Vorrichtung handeln. Das Substratmaterial ist vorzugsweise Papier, Pappe, Karton, Spezialpapiere, Folie, Textilien, Leder, Kunstleder, Holz, Laminate, Kunststoffe oder andere elektrisch nicht leitfähige Materialien. Vorzugsweise wird das Material mit der elektrisch leitfähigen Grundstruktur bedruckt. Bevorzugte Druckverfahren im Rahmen der Erfindung sind Offsetdruck, Flexodruck, Tiefdruck, Siebdruck, Inkjetdruck, Thermotransferdruck, die Applikation mittels Stiften sowie andere Beschichtungs- und Strukturierungsverfahren ohne darauf beschränkt zu sein.

Es ist im Sinne der Erfindung bevorzugt, dass die durch die Modifikation der elektrisch leitfähigen Grundstruktur auf einem kapazitiven Flächensensor ein anderes zeitabhängiges Signal erzeugt, als das Signal, welches von der Grundstruktur erzeugt wird, wobei die beiden unterschiedlichen Signale beziehungsweise ihre Unterschiede vorteilhafterweise von einem Flächensensor detektierbar sind.

Grundsätzlich kann die Modifikation/Veränderung der erfindungsgemäßen Vorrichtung durch folgende Aktionen erfolgen:
1. Auf eine elektrisch leitfähige Struktur mit einem definierten Muster (Gitter, Grundstruktur) wird nachträglich lokal elektrisch leitfähiges Material aufgetragen, zum Beispiel mit einem Stift mit elektrisch leitfähiger Tinte oder durch nachträgliches Bedrucken mittels elektrisch leitfähiger Tinte. Dadurch werden zum Beispiel Elemente der Grundstruktur galvanisch oder kapazitiv verbunden oder es werden Elemente zur Grundstruktur hinzugefügt. Mit anderen Worten ist es in einer Ausführungsform der Erfindung bevorzugt, dass das selektive und/oder lokale Auftragen von elektrisch leitfähigem Material mittels eines Stiftes mit elektrisch leitfähiger Tinte oder durch Bedrucken mittels elektrisch leitfähiger Tinte erfolgt.
2. Die elektrisch leitfähige Grundstruktur selbst oder eine auf der elektrisch leitfähigen Grundstruktur aufgetragene elektrisch leitfähige Deckschicht wird selektiv oder lokal entfernt, zum Beispiel durch Perforation oder Anwendung eines Lasers. Dadurch werden beispielsweise
   a. Elemente der Grundstruktur entfernt, beziehungsweise unterbrochen oder
   b. Elemente der Grundstruktur durch das Entfernen der Deckschicht freigelegt.
3. Zwei verschiedene elektrisch leitfähige Strukturen werden miteinander kombiniert und ergeben zusammen eine neue elektrisch leitfähige Struktur, zum Beispiel indem zwei Sticker überlappend angeordnet werden.
4. Teilen der elektrisch leitfähigen Struktur: eine elektrisch leitfähige Struktur ist zum Beispiel wie ein Siegel an einer Verpackung angebracht und wird durch das Öffnen der Verpackung getrennt.
5. Dimensionsveränderungen, zum Beispiel Dehnen oder Schrumpfen, der elektrisch leitfähigen Grundstruktur durch äußere Einflüsse, zum Beispiel mechanische Belastung, Temperatureinwirkung, Feuchteeinwirkung etc.

In einer bevorzugten Ausführungsform der Erfindung liegen die Einzelelemente der elektrisch leitfähigen Struktur galvanisch getrennt voneinander vor. Das bedeutet im Sinne der Erfindung bevorzugt, dass die entsprechenden Einzelelemente keine elektrisch leitende Verbindung untereinander aufweisen. Wenn zum Beispiel die elektrisch leitfähige Grundstruktur Einzelelemente aufweist, die nicht elektrisch leitend miteinander verbunden sind, so können solche Einzelelemente im Rahmen der nachträglichen Veränderung elektrisch leitend miteinander verbunden werden, beispielsweise indem eine etwaige Lücke zwischen den Einzelelementen mit einem elektrisch leitfähigen Stift übermalt wird, wodurch vorteilhafterweise elektrisch leitfähiges Material in die Lücke zwischen die zuvor nicht elektrisch leitend verbundenen Einzelelemente eingebracht wird, wodurch eine elektrisch leitende Verbindung hergestellt werden kann.

In einer bevorzugten Ausgestaltung der Erfindung ist es bevorzugt, dass das veränderbare zeitabhängige Signal bezüglich Position, Geschwindigkeit, Richtung, Form, Unterbrechung des Signals, Frequenz und/oder Signalstärke mindestens teilweise verändert ist. Ausgehend von einer beispielhaften Eingabe in Form einer geraden, strichförmigen Bewegung auf einem Einzelelement der elektrisch leitfähigen Struktur bedeutet dies im Sinne der Erfindung bevorzugt, dass das erzeugte zeitabhängige Signal aufgrund der Modulation durch die Vorrichtung, beziehungsweise ihre elektrisch leitfähige Struktur, gegenüber der geraden, strichförmigen Eingabe eine abweichende Position, Richtung, Form und/oder Signalstärke aufweisen kann, das heißt beispielsweise räumlich versetzt, verzerrt und/oder verschoben vom Flächensensor erkannt wird. Dies führt bevorzugt zu einer anderen Form des detektierten elektrischen Signals im Vergleich zur Form der geraden, strichförmigen Bewegung, welche bevorzugt die dynamische Eingabe bildet. Es ist im Sinne der Erfindung insbesondere bevorzugt, dass das zeitabhängige Signal bezüglich Position, Geschwindigkeit, Richtung, Form, Unterbrechung des Signals, Frequenz und/oder Signalstärke modulierbar ist.

In einer bevorzugten Ausführungsform der Erfindung sind die Einzelelemente der elektrisch leitfähigen Struktur hinsichtlich Größe, Abstand und Form so dimensioniert, dass zu jedem Zeitpunkt der dynamischen Eingabe mindestens zwei Einzelelemente mindestens teilweise mit dem Eingabemittel in Wirkkontakt stehen. Das bedeutet im Sinne der Erfindung bevorzugt, dass zwei benachbarte Einzelelemente der elektrisch leitfähigen Struktur beispielsweise keinen Abstand zueinander aufweisen dürfen, der größer ist als die übliche Breite eines Eingabemittels, zum Beispiel eines menschlichen Fingers, weil das Eingabemittel dann nicht in der Lage wäre, beide benachbarte Einzelelemente gleichzeitig zu berühren.

Die folgenden Ausführungsformen der Erfindung betreffen insbesondere die verschiedenen Möglichkeiten, eine nachträgliche Veränderung der Vorrichtung vorzunehmen, um von der elektrisch leitfähigen Grundstruktur der Vorrichtung zu der zweiten elektrisch leitfähigen Struktur zu gelangen. Es ist im Sinne der Erfindung bevorzugt, dass die einzelnen Merkmale in jeglicher technisch sinnvollen Art und Weise kombiniert werden können.

In einer Ausgestaltung der Erfindung ist es bevorzugt, dass durch das selektive und/oder lokale Auftragen von elektrisch leitfähigem Material mittels eines Stiftes mit elektrisch leitfähiger Tinte oder durch Bedrucken mittels elektrisch leitfähiger Tinte im Inkjetdruckverfahren eine Regionalisierung oder Serialisierung der elektrisch leitfähigen Grundstruktur erfolgen kann. Dadurch lassen sich beispielsweise Passdokumente oder Geldscheine mit einer Seriennummer versehen, wodurch die vorliegenden Erfindung vorteilhafterweise auch bei sicherheitsrelevanten Dokumenten einsetzbar ist.

In einer weiteren bevorzugten Ausführungsform der Erfindung erfolgt das selektive und/oder lokale Entfernen von elektrisch leitfähigem Material mittels Laser, Perforieren, Abziehen oder mechanischem Abrieb. Insbesondere ist es in dieser Ausführungsform der Erfindung bevorzugt, dass die Elemente der elektrisch leitfähigen Grundstruktur mindestens teilweise entfernt oder unterbrochen werden und/oder die Elemente der elektrisch leitfähigen Struktur durch das Entfernen einer elektrisch leitfähigen Deckschicht freigelegt werden.

In einer Ausgestaltung der Erfindung ist es bevorzugt, dass die Kombination von mindestens zwei elektrisch leitfähigen Grundstrukturen durch eine oder mehrere der folgenden Maßnahmen erfolgen kann:
a) irreversible Verfahren, wie Kleben, Tackern und/oder Verschweißen,
b) reversible Verfahren, wie formschlüssige Verbindung, Puzzle, Kleben mit wieder (ab)lösbarem Kleber und/oder Zusammenfügen.

In einer weiteren bevorzugten Ausführungsform der Erfindung erfolgt das Teilen oder Trennen der elektrisch leitfähigen Grundstruktur durch eine oder mehrere der folgenden Maßnahmen
a) das Öffnen einer Verpackung oder das Abreißen eines Kontrollstreifens,
b) das Abziehen eines Etikettes oder eines Labels, welches sich beim Abziehen in mindestens zwei Teile teilt oder de-laminiert.

In einer weiteren Ausgestaltung der Erfindung ist es bevorzugt, dass die Dimensionsveränderung der elektrisch leitfähigen Grundstruktur durch die Einwirkung von Umgebungseinflüssen, wie mechanische Belastung, Zug, Druck, Temperatureinwirkung oder Feuchteeinwirkung verursacht wird. Beispielsweise kann die elektrisch leitfähige Struktur mit Wärme behandelt werden, wodurch beispielsweise ein Schrumpfen der Struktur beziehungsweise ihrer Einzelelemente bewirkt werden kann. Es kann im Sinne der Erfindung auch bevorzugt sein, die Vorrichtung mit der elektrisch leitfähigen Struktur einer Flüssigkeit, zum Beispiel Wasser, auszusetzen, wodurch quellfähige Bestandteile des Materials, aus dem die elektrisch leitfähige Struktur besteht, aufquellen. Dadurch kann vorzugsweise die äußere Gestalt der gesamten elektrisch leitfähigen Struktur oder die äußere Gestalt der Einzelelemente der elektrisch leitfähigen Struktur geändert werden. Es kann im Sinne der Erfindung auch bevorzugt sein, Veränderungen an dem Substrat, das heißt bevorzugt an der Vorrichtung vorzunehmen, so dass die Vorrichtung selbst zum Beispiel ihre Form ändert, wodurch bevorzugt auch eine Änderung der Form und/oder Dimensionierung der elektrischen leitfähigen Struktur einhergehen kann.

In einer weiteren bevorzugten Ausführungsform der Erfindung werden zum selektiven und/oder lokalen Auftragen einer zusätzlichen elektrisch leitfähigen Schicht, Materialien mit zeitlich veränderlichen Eigenschaften verwendet. Das bedeutet im Sinne der Erfindung, dass das Material, welches die zusätzliche elektrisch leitfähige Schicht bildet, zeitlich veränderliche Eigenschaften aufweist. Dies kann beispielsweise mit einer elektrisch leitfähigen Tinte realisiert werden, die weitere Bestandteile umfasst, die sich mit der Zeit aus dem Material verflüchtigen, wodurch sich beispielsweise die Zusammensetzung und/oder Beschaffenheit oder sonstige Eigenschaften des zurückbleibenden Material verändern können. Es ist in manchen Ausführungsformen der Erfindung bevorzugt, die elektrisch leitfähige Grundstruktur als erste elektrisch leitfähige Schicht zu bezeichnen. Es ist ferner in manchen Ausführungsformen der Erfindung bevorzugt, die zweite elektrisch leitfähige Struktur als zweite elektrisch leitfähige Schicht zu bezeichnen.

In einem weiteren Aspekt betrifft die Erfindung die Verwendung der Vorrichtung, wobei eine elektrisch leitfähige Struktur der Vorrichtung mit dem kapazitiven Flächensensor mindestens teilweise in einem Wirkkontakt steht, wobei die Erzeugung des zeitabhängigen Signals auf dem kapazitiven Flächensensor durch Modulation einer dynamischen Eingabe durch die Vorrichtung erfolgt.

In einem weiteren Aspekt betrifft die Erfindung eine elektrisch leitfähige Struktur für eine Vorrichtung, mit der ein zeitabhängiges Signal auf einem Flächensensor erzeugt werden kann. Die elektrisch leitfähige Struktur umfasst vorzugsweise die elektrisch leitfähige Grundstruktur und die zweite elektrisch leitfähige Struktur, so dass dieser Aspekt der Erfindung vorzugsweise auch als System von elektrisch leitfähigen Strukturen bezeichnet werden kann. Für diese Aspekte gelten die für die Vorrichtung beschriebenen Definitionen, technischen Wirkungen und Vorteile analog.

### Ausführungsbeispiele der Erfindung:

### "Beschreibbarer" Speicher (Hinzufügen einer zweiten elektrisch leitfähigen Struktur)

Der Begriff "beschreibbar" kann für diese Ausführungsform bevorzugt im wahrsten Sinne des Wortes verstanden werden. Die Vorrichtung, die in diesem Ausführungsbeispiel bevorzugt als Datenspeicher bezeichnet wird, umfasst vorzugsweise eine elektrisch leitfähige Schicht, die in einer Grundstruktur vorliegt. Dies kann zum Beispiel eine generische Gitterstruktur mit definierten Unterbrechungen sein oder eine Struktur umfassend mehrere gleichförmige Einzelelemente, die beispielsweise in regelmäßigen Abständen angeordnet sein können.

In einer weiteren bevorzugten Ausführungsform kann es sich auch um eine konkrete Code-Struktur handeln. Diese Grundstruktur erzeugt auf einem kapazitiven Flächensensor ein Referenzsignal. In einem konkreten Ausführungsbeispiel kann die elektrisch leitfähige Grundstruktur ein zeitabhängiges Signal in Form einer geraden Linie auf dem kapazitiven Flächensensor erzeugen. Durch das lokale nachträgliche Auftragen einer zweiten elektrisch leitfähigen Schicht, welche die elektrisch leitfähige Grundstruktur mindestens teilweise überlappt, entsteht eine neue resultierende elektrisch leitfähige Struktur. Diese resultierende elektrisch leitfähige Struktur erzeugt im Vergleich zum Referenzsignal ein verändertes zeitabhängiges Signal auf dem kapazitiven Flächensensor.

Das nachträgliche lokale Auftragen einer weiteren elektrisch leitfähigen Schicht kann zum Beispiel mittels eines elektrisch leitfähigen Stiftes erfolgen. Darüber hinaus ist es möglich, eine zusätzliche elektrisch leitfähige Struktur durch Druckverfahren, Folientransferverfahren, Stempel oder andere selektive Beschichtungsverfahren aufzutragen. Die nachträglich applizierte zweite elektrisch leitfähige Schicht kann unter oder auf die Vorrichtung appliziert werden, wobei die Vorrichtung beispielsweise von einem kartenähnlichen Objekt gebildet werden kann. In einer weiteren Ausführungsform kann die weitere elektrisch leitfähige Schicht auch auf einem zweiten Substrat oder auf der Rückseite der Vorrichtung appliziert werden.

In einer bevorzugten Ausführungsform liegt die Grundstruktur offen vor und die zweite elektrisch leitfähige Schicht geht eine galvanische Verbindung mit der ersten elektrisch leitfähigen Schicht ein, das heißt im Sinne der Erfindung bevorzugt, dass Elemente der Grundstruktur elektrisch miteinander verbunden beziehungsweise überbrückt werden. Der Begriff "offen" bedeutet im Sinne der Erfindung bevorzugt, dass die Struktur in diesem Fall nicht durch eine zusätzliche Deckschicht abgedeckt vorliegt.

In einer weiteren bevorzugten Ausführungsform liegt die Grundstruktur verdeckt vor, das heißt die erste elektrisch leitfähige Struktur ist zum Beispiel durch eine Lackschicht und/oder Farbschicht und/oder ein zusätzliches Laminatmaterial, zum Beispiel Papier oder Folie, abgedeckt. In diesem Fall steht die zweite elektrisch leitfähige Schicht in kapazitivem Wirkkontakt mit der ersten elektrisch leitfähigen Schicht. Die Einzelelemente können kapazitiv miteinander verbunden werden. Die resultierende Struktur erzeugt vorzugsweise ein vom Referenzsignal abweichendes Signal auf dem kapazitiven Flächensensor.

Der Vorgang des nachträglichen Beschreibens kann beispielsweise mehrfach erfolgen. Mit jedem Schreibvorgang wird das resultierende Signal weiter verändert. Somit können der Vorrichtung Statusinformationen zugeordnet werden, die im Laufe von Verarbeitungsprozessen angepasst und weiter verändert werden können.

In einer bevorzugten Ausführungsform kann die zweite elektrisch leitfähige Schicht beliebig frei angeordnet werden. Anwendungen für diese Ausführungsform sind zum Beispiel Grußkarten und individualisierte Dokumente. In einer weiteren Ausführungsform ist es bevorzugt, nur bestimmte vorgegebene Stellen nachträglich zu bemalen, zu markieren und/oder zu beschreiben. Diese können beispielsweise auf der Vorrichtung vorgegeben sein.

In einer bevorzugten Ausführungsform kann ein kapazitiver Datenspeicher, d.h. bevorzugt die Vorrichtung, durch eine Markierung aktiviert oder deaktiviert werden. Diese Markierung kann zum Beispiel mit einem Stift erfolgen. Ist der kapazitive Datenspeicher als Label beziehungsweise Etikett ausgeführt, kann diese Markierung unter oder über dem Label appliziert werden. In einem konkreten Beispiel kann ein Dokument mit einem Stift markiert werden und nachträglich ein Label mit elektrisch leitfähiger Struktur appliziert werden.

In einer bevorzugten Ausführungsform erzeugt die elektrisch leitfähige Grundstruktur ein zeitabhängiges Referenzsignal auf dem kapazitiven Flächensensor. In dieser Ausführungsform werden Markierungen in Form von Kreuzen oder anderen Symbolen beziehungsweise Zeichen nachträglich durch einen elektrisch leitfähigen Stift oder einen weiteren Druckvorgang appliziert. Diese zweite elektrisch leitfähige Schicht überlappt mindestens teilweise mit der elektrisch leitfähigen Grundstruktur. Die resultierende elektrisch leitfähige Struktur erzeugt auf dem kapazitiven Flächensensor ein verändertes elektrisch leitfähiges Signal.

Eine solche Grundstruktur kann für verschiedene Arten von Dokumenten, Formularen, Spielen und so weiter angepasst werden. Diese Dokumente, Formulare und/oder Spiele bilden vorzugsweise die Vorrichtung im Sinne der Erfindung. Grundsätzlich kann für jede Art von Vordruck mit mehr oder weniger fest definierten Eingabebereichen, das heißt Bereichen, in denen das nachträgliche Auftragen einer zweiten elektrisch leitfähigen Schicht gewünscht ist, eine passende Grundstruktur entwickelt und bereitgestellt werden.

Anwendungen für diese Ausführungsform sind zum Beispiel Spiele, Lotterielose, Bingo, "Schiffe versenken", Gutscheinkarten mit bestimmtem Wert etc. Auch Anwendungen in der Qualitätssicherung, zum Beispiel durch Abstreichen bestimmter Felder beim Durchlaufen bestimmter Prüfungen, Zählbogen, Formulare, Inventurlisten, automatisierte Auswertung von Fragebogen oder Tests und so weiter sind mögliche Anwendungen für diese Ausführungsform der Erfindung.

In einer weiteren bevorzugten Ausführungsform kann eine regelmäßige elektrisch leitfähige Grundstruktur auch nachträglich mittels Inkjektdruck oder anderen Druckverfahren individualisiert oder sogar serialisiert werden. Dies kann durch das nachträgliche Verbinden von elektrisch leitfähigen Elementen oder durch das Erweitern (Verlängern) von elektrisch leitfähigen Elementen realisiert werden.

Anwendungen dieser Ausführungsform der Erfindung sind die Kennzeichnung von Dokumenten und/oder Produkten für Identifikationszwecke, zur Rückverfolgung von Dokumenten/Produkten, Track-and-Trace-Anwendungen, Markieranwendungen, Authentifizierung von Dokumenten/Produkten, Serialisierung von Dokumenten/Produkten sowie Kopierschutz von Dokumenten ohne darauf beschränkt zu sein.

In einer weiteren Ausführungsform können elektrisch leitfähige Materialien mit zeitlich veränderlichen Eigenschaften nachträglich zum Beispiel mittels Stift aufgetragen werden. Damit können temporäre beziehungsweise nicht permanente Änderungen vorgenommen werden und somit auch temporär beziehungsweise nicht permanent andere Signale auf dem kapazitiven Flächensensor erzeugt werden.

Diese Ausführungsform ermöglicht eine temporäre Kennzeichnung von Dokumenten und/oder Produkten. Geeignete Materialien erlangen ihre volle elektrische Leitfähigkeit erst nach einiger Zeit, wenn bestimmte Trocknungs-/Sinterparameter vorliegen. Somit kann in Abhängigkeit von Temperatur, Luftfeuchte und weiteren Umgebungsbedingungen die Zeit zur Erlangung der Ziel-Leitfähigkeit beeinflusst beziehungsweise gesteuert werden. Umgekehrt gibt es Materialien, deren elektrische Leitfähigkeit unter Einfluss von Temperatur und Luftfeuchte nachlässt. Im Sinne der Erfindung bedeutet dies, dass die mittels Stift veränderte elektrisch leitfähige Struktur nach ausreichender Exposition bei bestimmten Umweltparametern wieder das Referenzsignal auf einem kapazitiven Flächensensor erzeugt, da die Leitfähigkeit der zweiten elektrisch leitfähigen Schicht durch die Umwelteinflüsse soweit reduziert wurde, dass die verändernde Wirkung der zweiten elektrisch leitfähigen Schicht auf das Signal auf dem kapazitiven Flächensensor nach einiger Zeit abgeklungen ist.

Um ein Sicherheitslevel der Vorrichtung zu erhalten, ist es im Sinne der Erfindung bevorzugt, das nachträglich aufgetragene elektrisch leitfähige Material zusätzlich mit sogenannten Taggants auszustatten. Der Begriff "Taggant" beschreibt im Sinne der Erfindung bevorzugt solche Stoffe und/oder Elemente, die zur Markierung beispielsweise in Kunststoffen, Tinten, Farben, Lacken, Spray, Klebstoffen, Pulvern, Sicherheitsfäden, Folien, Papier, Etiketten, aber auch Sprengstoffen oder anderen Materialien zugegeben werden können. Es ist bevorzugt, dass die Marker-Materialien chemisch gelöst oder in Form von Partikeln vorliegen und/oder in das jeweilige Produkt integriert sein können. Taggants können vorzugsweise in folgenden Gebieten eingesetzt werden: Banknotenauthentifizierung, Steuermarkenauthentifizierung, Markenschutz, Kennzeichnung von Zigarettenverpackungen, alkoholischen Produkten, pharmazeutischen Produkten, aber auch von Konsumgütern des täglichen Bedarfs, sowie Baustoffen und Halbzeugen.

Taggants werden vorzugsweise mit Hilfe von speziellen Lesegeräten identifiziert und/oder authentifiziert. Sie können für das menschliche Auge sichtbar oder unsichtbar sein. Die Funktionsweise der bevorzugt speziell entwickelten Lesegeräte basiert auf optischen und/oder akustischen Verfahren oder analysiert das Material auf molekularer Ebene. Es kommen zum Beispiel spektrale Lesegeräte, Lesegeräte basierend auf Laser, UV-Licht oder anderen spezifischen Wellenlängen, akustische Messgeräte oder auch Mikroskope zum Einsatz.

Im Sinne dieser Erfindung ist es besonders überraschend, dass die erfindungsgemäße leitfähige Struktur, sowie deren nachträgliche Veränderung die Funktionsweise solcher Taggants nicht beeinträchtigen. Durch die Integration von Taggants in das nachträglich aufgetragene elektrisch leitfähige Material kann vorteilhafterweise ein zusätzliches Sicherheitslevel für die Anwendung eingeführt werden. Die nachträgliche Modifikation durch Auftragen von zusätzlichem elektrisch leitfähigem Material bewirkt vorzugsweise ein zweites Signal auf dem kapazitiven Flächensensor. Gleichzeitig kann das zusätzlich aufgetragene elektrisch leitfähige Material mit Hilfe der Taggants und geeigneten Lesegeräten identifiziert werden, um somit die Authentizität des Materials, welches beispielsweise in Form einer Tinte in einem Stift oder als Druckfarbe verwendet wird, nachzuweisen. Die Kombination der elektrischen Leitfähigkeit des Materials sowie der beinhaltenden Taggants im Material erhöht die Kopiersicherheit nochmals und bietet einen zusätzlichen Manipulationsschutz für sicherheitsrelevante Anwendungen.

### Entfernen der elektrisch leitfähigen Schicht oder einer zweiten elektrisch leitfähigen Deckschicht:

In einer bevorzugten Ausführungsform liegt eine elektrisch leitfähige Struktur vor, die mit einer zweiten elektrisch leitfähigen Deckschicht mindestens teilweise abgedeckt ist. Diese Struktur wird als elektrische leitfähige Grundstruktur bezeichnet. Durch das Entfernen dieser Deckschicht wird die darunterliegende resultierende Struktur freigelegt.

Eine bevorzugte Ausführungsform wird die Vorrichtung von einem kartenähnlichen Objekt gebildet, wobei die Vorrichtung eine elektrisch leitfähige Struktur umfasst. Auf dieser Struktur befindet sich partiell eine elektrisch leitfähige Deckstruktur. In diesem Zustand erzeugt diese Karte bei Auflegen auf einem kapazitiven Flächensensor und dynamischer Eingabe auf der Vorrichtung durch ein Eingabemittel ein zeitabhängiges Signal in Form einer geraden Linie.

Nachdem die elektrisch leitfähige Deckstruktur entfernt wurde, liegt auf dem kartenähnlichen Objekt eine elektrisch leitfähige resultierende Struktur vor. In diesem Zustand erzeugt diese Karte bei Auflegen auf einem kapazitiven Flächensensor und dynamischer Eingabe auf der Vorrichtung durch ein Eingabemittel ein verändertes zeitabhängiges Signal, welches gegenüber dem Referenzsignal abgelenkt ist. Die dynamische Bewegung des Eingabemittels, wie zum Beispiel einem Finger oder einem Stift, auf dem kartenähnlichen Objekt oder der Vorrichtung verursacht das zeitabhängige Signal auf dem kapazitiven Flächensensor.

Anwendungen dieser Ausführungsform können zum Beispiel Rubbellose oder jegliche Dokumente sein, bei denen eine Aktivierung durch den Nutzer erwünscht ist. Weitere Anwendungsmöglichkeiten dieser Ausführung liegen in der PIN-Sicherung sowie im Manipulationsschutz von Zugangsdaten und Authentifizierungskennungen, ohne darauf beschränkt zu sein. So können zum Beispiel elektronische PIN-Codes zur Nutzer-Authentifizierung, zur SIM-Karten Aktivierung, PIN-Codes für Bankkarten oder Codes zur Aktivierung von Nutzerkonten vor Manipulationen oder unerwünschtem Ausspähen geschützt werden. In dieser Anwendung kann die PIN oder Zugangsnummer mittels der elektrisch leitfähigen Struktur codiert sein und durch eine Decklage abgedeckt sein. Erst nach Entfernen der Decklage oder Deckschicht lässt sich die PIN mit Hilfe des Eingabemittels auf den kapazitiven Flächensensor übertragen. Die Ausführung der Decklage umfasst eine elektrisch leitfähige Schicht, einlagige oder mehrlagige elektrisch leitfähige Etiketten, Hologramme, holografische Rubbelflächen und mehrdimensionale Hologramme. Dem Fachmann bekannte Hologramme oder holografische Folien sind insbesondere geeignet, da die verwendeten Materialien üblicherweise elektrisch leitfähig sind.

In einer weiteren Ausführungsform wird die elektrisch leitfähige Grundstruktur selbst selektiv und/oder lokal entfernt. Dadurch werden Elemente der Grundstruktur selektiv oder vollständig entfernt beziehungsweise unterbrochen oder anderweitig verändert. Das partielle Entfernen der Grundstruktur kann zum Beispiel durch Lochen, Perforieren, mechanischem Abrieb, Rubbeln, Zerreißen, Zerschneiden, Teilen, Stanzen, Laserablation, Laserschneiden, Oxidation und/oder andere chemische Prozesse der Grundstruktur erfolgen, ohne darauf beschränkt zu sein.

In einer weiteren bevorzugten Ausführungsform erzeugt eine elektrisch leitfähige Grundstruktur bei Auflegen auf einem kapazitiven Flächensensor und dynamischer Eingabe auf der Vorrichtung durch ein Eingabemittel ein zeitabhängiges Signal in Form einer geraden Linie. Nachdem Teile der elektrisch leitfähigen Grundstruktur entfernt wurden, erzeugt diese Karte bei Auflegen auf einem kapazitiven Flächensensor und dynamischer Eingabe auf der Vorrichtung durch ein Eingabemittel ein abgelenktes zeitabhängiges Signal, das im Sinne der Erfindung als moduliertes Signal bezeichnet wird.

### Kombinieren von mindestens zwei elektrisch leitfähigen Grundstrukturen

In einer bevorzugten Ausführungsform werden zwei voneinander unabhängige elektrische leitfähige Grundstrukturen miteinander kombiniert. Zusammen ergeben diese beiden Strukturen eine neue elektrisch leitfähige Struktur und erzeugen ein resultierendes Signal welches sich von den Referenzsignalen der beiden unabhängigen elektrisch leitfähigen Grundstrukturen unterscheidet.

Die Kombination der beiden Grundstrukturen kann beispielsweise irreversibel durchgeführt werden, zum Beispiel durch Kleben, Tackern und/oder Verschweißen. In einer weiteren bevorzugten Ausführungsform kann die Kombination der beiden Grundstrukturen reversibel, zum Beispiel durch formschlüssige Verbindung, Puzzle, Kleben mit wieder ablösbarem Kleber und/oder Zusammenfügen erfolgen.

In einem Ausführungsbeispiel können einzelne Puzzle-Teile mit jeweils eigenen elektrisch leitfähigen Grundstrukturen ausgestattet sein. Durch Kombination ergibt sich eine neue Struktur, die bei Auflegen der Vorrichtung auf dem kapazitiven Flächensensor und dynamischer Eingabe durch ein Eingabemittel einen spezifischen Signalverlauf auf dem kapazitiven Flächensensor erzeugt.

Anwendungen für diese Ausführungsform sind zum Beispiel Puzzle, Spieleanwendungen o.ä.

In einer weiteren bevorzugten Ausführungsform erfolgt die Kombination von mindestens zwei elektrisch leitfähigen Grundstrukturen, indem zwei Etiketten oder Label übereinander geklebt werden. Diese beiden Strukturen ergeben in Kombination eine neue leitfähige Struktur, die im Sinne der Erfindung als zweite elektrisch leitfähige Struktur bezeichnet wird. Da das Eingabemittel in einer bevorzugten Richtung relativ zur elektrisch leitfähigen Struktur bewegt wird, um ein Signal auf dem Flächensensor zu erzeugen, sind die Etiketten entsprechend zueinander auszurichten.

### Teilen der elektrisch leitfähigen Struktur:

Eine bevorzugte Ausführungsform der Erfindung betrifft eine elektrisch leitfähige Grundstruktur, die durch die Nutzung beabsichtigt oder unbeabsichtigt in mindestens zwei Teile geteilt wird. Die mindestens zwei Teile erzeugen jeweils ein im Vergleich zum Referenzsignal unterschiedliches Signal auf dem kapazitiven Flächensensor.

Ein Anwendungsbeispiel betrifft ein Siegel mit elektrisch leitfähiger Grundstruktur, welches auf einer Verpackung angebracht ist. Durch das Öffnen der Verpackung wird das Siegel und die darauf befindliche Grundstruktur in mindestens zwei Teilstrukturen geteilt. Die jeweils resultierenden zeitabhängigen Signale der Teilstrukturen auf dem kapazitiven Flächensensor unterscheiden sich vom Referenzsignal. Anwendungsgebiete dieses Ausführungsbeispiels sind Manipulationsschutz, Erstöffnungsschutz, Versiegelung oder die Bereitstellung von Tamper-Proof Verpackungen.

Eine weitere Ausführungsform betrifft das Abreißen eines Kontrollstreifens, zum Beispiel bei einem Ticket.

Ein weiteres Anwendungsbeispiel ist ein manipulationssicheres Etikett oder Label mit einer elektrisch leitfähigen Grundstruktur. Dieses Label kann auf Dokumenten, Sicherheitsdokumenten oder direkt auf Produkten appliziert werden. In einer bevorzugten Ausführungsform ist das Etikett vorperforiert und teilt sich beim Versuch, das Etikett zu entfernen in mindestens zwei Teile.

In einer weiteren bevorzugten Ausführungsform de-laminiert die elektrisch leitfähige Grundstruktur beim Versuch, das Label/Etikett zu entfernen, das heißt im Sinne der Erfindung bevorzugt, dass die elektrisch leitfähige Grundstruktur zum Teil auf dem Dokument oder Produkt verbleibt und zum Teil abgelöst wird. In beiden beschriebenen Fällen erzeugen die Teile der elektrisch leitfähigen Struktur nach Ablösen des Etiketts ein vom Referenzsignal unterschiedliches dynamisches Signal auf dem kapazitiven Flächensensor.

Es ist im Sinne der Erfindung insbesondere bevorzugt, die Vorrichtung zur Produkt-und/oder Dokumentensicherung einzusetzen.

### Dehnen/Schrumpfen der elektrisch leitfähigen Struktur

In einer weiteren bevorzugten Ausführungsform wird die elektrisch leitfähige Grundstruktur durch äußere Einflüsse, zum Beispiel mechanische Belastung, Zugbelastung, Druckbelastung, Temperatureinwirkungen oder Feuchteeinwirkung, gedehnt oder geschrumpft. Die resultierende elektrisch leitfähige Struktur weißt somit veränderte geometrische Dimensionen im Vergleich zur elektrisch leitfähigen Grundstruktur auf. Die resultierende Struktur erzeugt auf dem kapazitiven Flächensensor ein verändertes zeitabhängiges Signal. Eine derartige Vorrichtung kann als Dehnungssensor eingesetzt werden. Bevorzugte Substrate für diese Ausführungsform sind flexible und/oder elastische Materialien, wie zum Beispiel Kunststoffe, Folien oder Textilien.

Bevorzugt können Dehnungen oder Schrumpfungen im Bereich zwischen 10 und 100 % detektiert werden. Höhere Dehnfaktoren können je nach Substratmaterial und elektrisch leitfähigem Material zur partiellen Zerstörung der elektrisch leitfähigen Schicht führen, was eine Bestimmung des Dehnfaktors erschwert beziehungsweise unmöglich macht. Besonders bevorzugt können Dehnungen oder Schrumpfungen im Bereich zwischen 20 und 50% detektiert werden. In diesem Bereich ist in der Regel eine besonders sichere Bestimmung des Dehnfaktors möglich.

In einem bevorzugten Ausführungsbeispiel kann die Ausdehnung von Rollenware beziehungsweise Bahnmaterial während der Ab-/Aufrollung, Umspulung oder Verarbeitung bestimmt werden. Durch die Anordnung eines kapazitiven Flächensensors, zum Beispiel am Rand der Bahnware, kann bei bekannter Bahngeschwindigkeit die Ausdehnung beziehungsweise Schrumpfung des Materials bestimmt werden.

Die Erfindung wird anhand der nachfolgenden Figuren näher beschrieben.

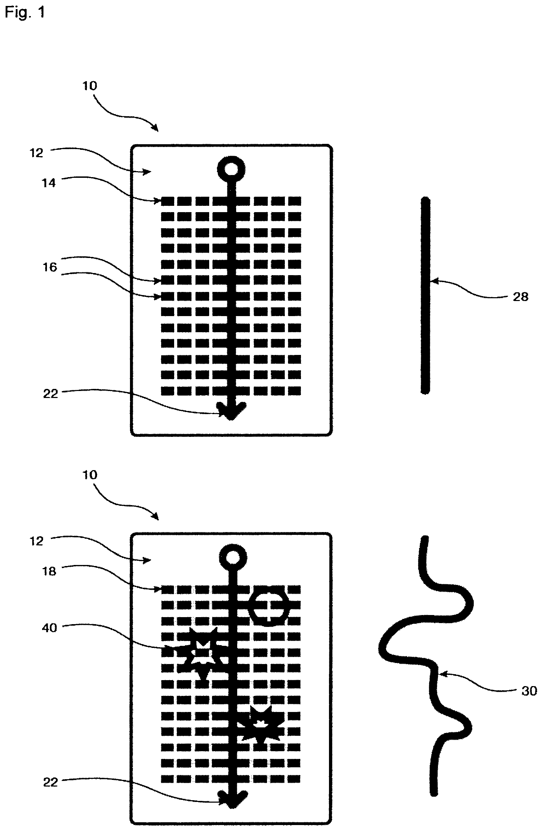

Figur 1 zeigt ein Ausführungsbeispiel, bei der die elektrisch leitfähige Grundstruktur (14) ein zeitabhängiges Referenzsignal (28) in Form einer geraden Linie auf dem kapazitiven Flächensensor (24) erzeugt. Durch das lokale nachträgliche Auftragen einer zweiten elektrisch leitfähigen Schicht (40), welche die elektrisch leitfähige Grundstruktur (14) mindestens teilweise überlappt, entsteht eine neue resultierende elektrisch leitfähige Struktur (18). Die elektrisch leitfähige Grundstruktur (14) und die zweite elektrisch leitfähige Struktur (18) werden als Oberbegriff mit dem Begriff "elektrisch leitfähige Struktur (70)" bezeichnet. Die resultierende elektrisch leitfähige Struktur (18) erzeugt im Vergleich zum Referenzsignal (28) ein verändertes Signal (30) auf dem kapazitiven Flächensensor (24).

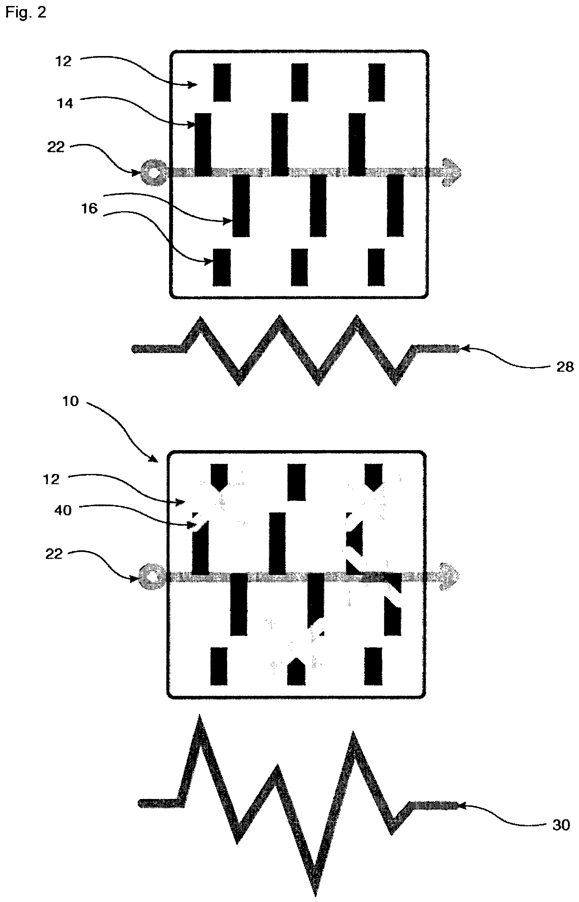

Figur 2a (oben) zeigt eine regelmäßige elektrisch leitfähige Grundstruktur (14). Diese Grundstruktur erzeugt auf dem kapazitiven Flächensensor (nicht dargestellt) ein zeitabhängiges Referenzsignal (28), das diese Regelmäßigkeit widerspiegelt. Figur 2b (unten) zeigt zusätzliche beispielhafte Markierungen in Form von Kreuzen (40), die nachträglich durch einen elektrisch leitfähigen Stift oder einen weiteren Druckvorgang appliziert werden können. Diese zweite elektrisch leitfähige Schicht (40) überlappt mindestens teilweise mit der elektrisch leitfähigen Grundstruktur (14). Die resultierende elektrisch leitfähige Struktur (18) erzeugt auf dem kapazitiven Flächensensor ein verändertes elektrisch leitfähiges Signal (30). Das Einfügen der Kreuze mit einem elektrisch leitfähigen Stift stellt eine nachträgliche Veränderung im Sinne der Erfindung dar, mit der die elektrisch leitfähige Grundstruktur (14) in eine zweite elektrisch leitfähige Struktur (18) umgewandelt wird. Die beiden elektrisch leitfähigen Strukturen (14 und 18) erzeugen jeweils unterschiedliche elektrische Signale (28 und 30) auf dem Flächensensor (24).

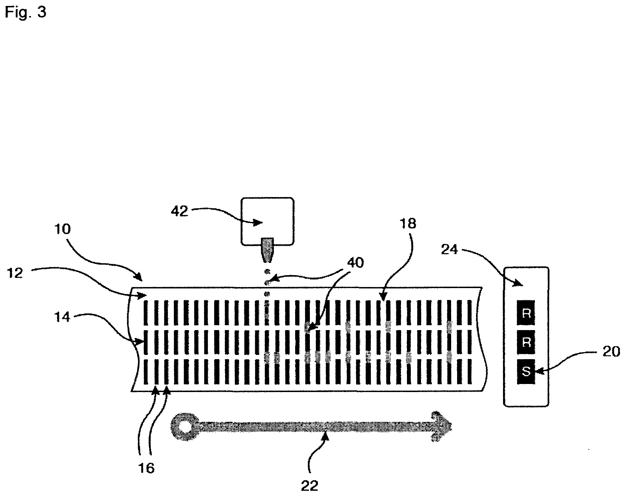

Figur 3 zeigt eine regelmäßige elektrisch leitfähige Grundstruktur (14), die auf einem bahnförmigen Substratmaterial (12) angeordnet ist. Die Einzelelemente (16) der elektrisch leitfähigen Struktur sind im vorliegenden Ausführungsbeispiel Elemente gleicher Geometrie (Form) und Größe, die regelmäßig und mit gleichem Abstand zueinander angeordnet sind. Das bahn- oder rollenförmige Substratmaterial (12) mit der elektrisch leitfähigen Grundstruktur (14) bewegt sich in der angegebenen Richtung (22) relativ zu einem Inkjetdrucker (42), der über der sich bewegenden Substratbahn (12) angeordnet ist. Mittels des Inkjetdruckers (42) wird zusätzliches elektrisch leitfähiges Material (40) partiell auf das Substrat (12) aufgetragen. Das zusätzlich aufgetragene elektrisch leitfähige Material (40) überlappt die elektrisch leitfähige Grundstruktur (14) mindestens teilweise und verbindet damit Einzelelemente (16) der elektrisch leitfähigen Grundstruktur (14).
   Mit diesem Verfahren kann eine elektrisch leitfähige Grundstruktur (14) nachträglich individualisiert oder sogar serialisiert werden. Der kapazitive Flächensensor (24) ist in diesem Beispiel so ausgelegt, dass eine der Elektroden auf dem Flächensensor als Eingabemittel (20) dient. Diese Elektrode ist in der Zeichnung mit "S" gekennzeichnet, was für Sende-Elektrode steht. Die beiden weiteren dargestellten Elektroden auf dem kapazitiven Flächensensor (24) sind mit "R" gekennzeichnet, was für Reader beziehungsweise Lese-Elektrode steht. Mit Hilfe des schematisch dargestellten kapazitiven Flächensensors wird die individualisierte resultierende elektrisch leitfähige Struktur (18) detektiert.

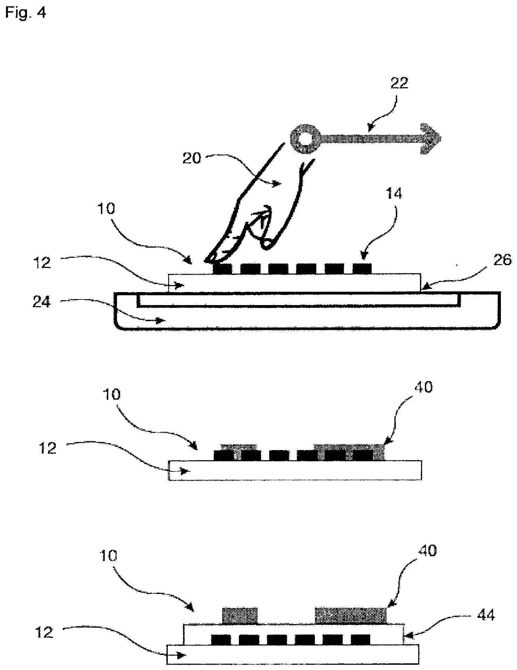

In Figur 4 sind zwei verschiedene Varianten zur Applikation des zusätzlichen elektrisch leitfähigen Materials (40) auf dem Substrat (12) mit bereits vorliegender elektrisch leitfähiger Grundstruktur (14) dargestellt.
Figur 4a zeigt eine elektrisch leitfähige Grundstruktur (14), die auf dem Substrat (12) angeordnet ist. Die Vorrichtung (10) steht mit dem kapazitiven Flächensensor (24) in Wirkkontakt (26). Das Eingabemittel (20) wird in einer Relativbewegung (22) über die Vorrichtung (10) bewegt. Dadurch wird auf dem kapazitiven Flächensensor (24) ein zeitabhängiges Signal (nicht dargestellt) erzeugt.
Figur 4b zeigt das zusätzliche applizierte elektrisch leitfähige Material (40), welches direkt auf die elektrisch leitfähige Grundstruktur (14) aufgetragen wurde. Dadurch kommt es zu einem direkten galvanischen Kontakt zwischen elektrisch leitfähiger Grundstruktur (14) und zusätzlichem elektrisch leitfähigen Material (40). In dieser Ausführungsform liegt die Grundstruktur (14) offen, das heißt nicht abgedeckt, vor und die zweite elektrisch leitfähige Schicht (40) geht eine galvanische Verbindung mit der ersten elektrisch leitfähigen Schicht (14) ein, das heißt Einzelelemente der Grundstruktur (16) werden elektrisch miteinander verbunden beziehungsweise galvanisch überbrückt.
In Figur 4c liegt die elektrisch leitfähige Grundstruktur (14) verdeckt vor, das heißt die erste elektrisch leitfähige Struktur (14) ist zum Beispiel durch eine zusätzliche Farb- oder Laminatschicht (44) abgedeckt. Diese zusätzliche Schicht kann eine Lackschicht und/oder Farbschicht und/oder ein zusätzliches Laminatmaterial, zum Beispiel Papier oder Folie, sein. In diesem Fall steht die zweite elektrisch leitfähige Schicht (40) in kapazitivem Wirkkontakt mit der ersten elektrisch leitfähigen Schicht (14). Einzelelemente (16) können kapazitiv miteinander verbunden werden. Die resultierende elektrisch leitfähige Struktur (18) erzeugt ein vom Referenzsignal (28) abweichendes Signal (30) auf dem kapazitiven Flächensensor (24).

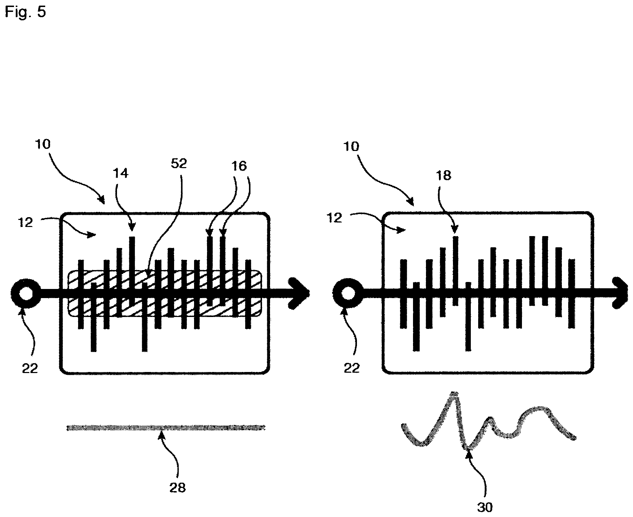

In Figur 5a ist ein kartenähnliches Objekt (10) mit einer elektrisch leitfähigen Struktur (14) dargestellt. Auf dieser Struktur befindet sich partiell eine elektrisch leitfähige Deckstruktur (52, schraffiert dargestellt). In diesem Zustand erzeugt die Karte (10) bei Auflegen auf einem kapazitiven Flächensensor (24, nicht dargestellt), wenn eine dynamische Eingabe von einem Nutzer auf der Vorrichtung unter Verwendung eines Eingabemittels (nicht dargestellt) vorgenommen wird, ein zeitabhängiges Signal in Form einer geraden Linie (28).
Die Figur 5b zeigt die elektrisch leitfähige resultierende Struktur (18), nachdem die elektrisch leitfähige Deckstruktur (52) entfernt wurde. In diesem Zustand erzeugt diese Karte (10) bei Auflegen auf einem kapazitiven Flächensensor und dynamischer Eingabe auf der Vorrichtung durch ein Eingabemittel ein abgelenktes zeitabhängiges Signal (30), wie in der Grafik dargestellt. Der Pfeil markiert in diesen Abbildungen die Bewegung eines Eingabemittels (22), wie einem Finger oder einem Stift, auf dem kartenähnlichen Objekt oder der Vorrichtung (10).

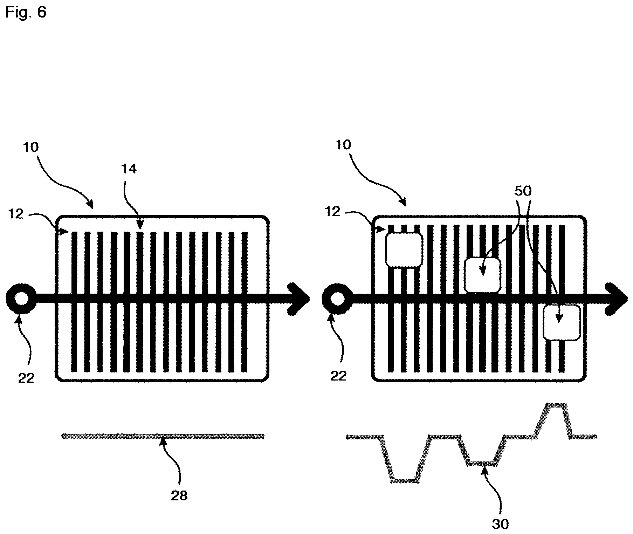

In Figur 6a ist ein kartenähnliches Objekt (10) mit einer elektrisch leitfähigen Grundstruktur (14) dargestellt. In diesem Zustand erzeugt diese Karte bei Auflegen auf einem kapazitiven Flächensensor (nicht dargestellt) und dynamischer Eingabe auf der Vorrichtung durch ein Eingabemittel (nicht dargestellt) ein zeitabhängiges Referenzsignal (28) in Form einer geraden Linie.
Die Figur 6b zeigt die resultierende elektrisch leitfähige Struktur (18), nachdem Teile der elektrisch leitfähigen Grundstruktur (14) entfernt wurden. In diesem Zustand erzeugt diese Karte bei Auflegen auf einem kapazitiven Flächensensor und dynamischer Eingabe auf der Vorrichtung durch ein Eingabemittel ein resultierendes abgelenktes zeitabhängiges Signal (30), wie in der Grafik dargestellt.

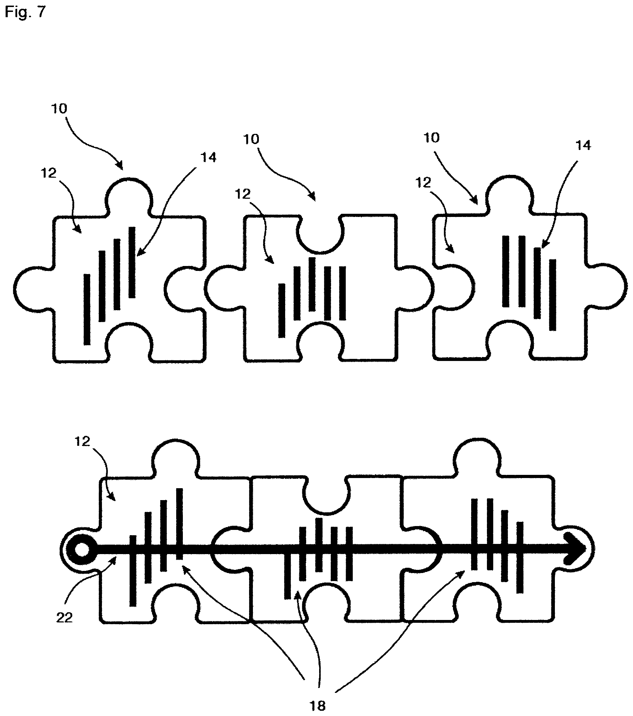

Figur 7 zeigt beispielhaft drei Puzzle-Teile, die jeweils eigene elektrisch leitfähige Grundstrukturen (14) aufweisen. Durch Kombination ergibt sich eine neue elektrisch leitfähige Struktur (18), die bei Auflegen auf einem kapazitiven Flächensensor (nicht dargestellt) der Vorrichtung und dynamischer Eingabe durch ein Eingabemittel (nicht dargestellt) einen spezifischen resultierenden Signalverlauf (30) auf dem kapazitiven Flächensensor erzeugt.

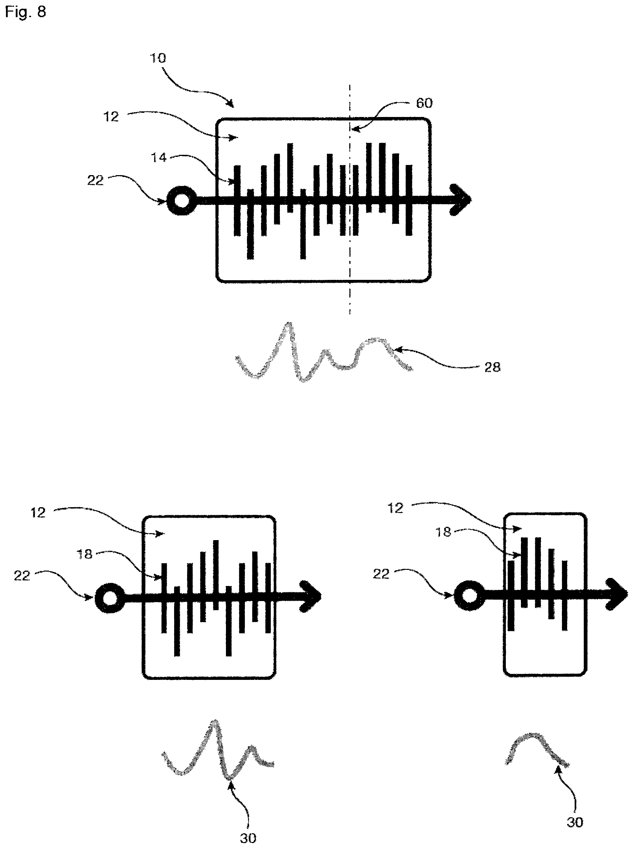

Figur 8 stellt ein kartenförmiges Objekt (10) mit einer elektrisch leitfähigen Grundstruktur (14) dar. Diese elektrisch leitfähige Grundstruktur (14) erzeugt auf dem kapazitiven Flächensensor ein zeitabhängiges Referenzsignal (28). Das Substratmaterial (12) ist mit einer Perforation (60) versehen. Nach Abtrennen eines Abschnittes des kartenförmigen Objektes (10) entlang der Perforationslinie liegen zwei Teile des kartenförmigen Objektes (10) mit zwei verschiedenen resultierenden elektrisch leitfähigen Strukturen (18) vor, die jeweils veränderte resultierende Signale (30) auf dem kapazitiven Flächensensor erzeugen.

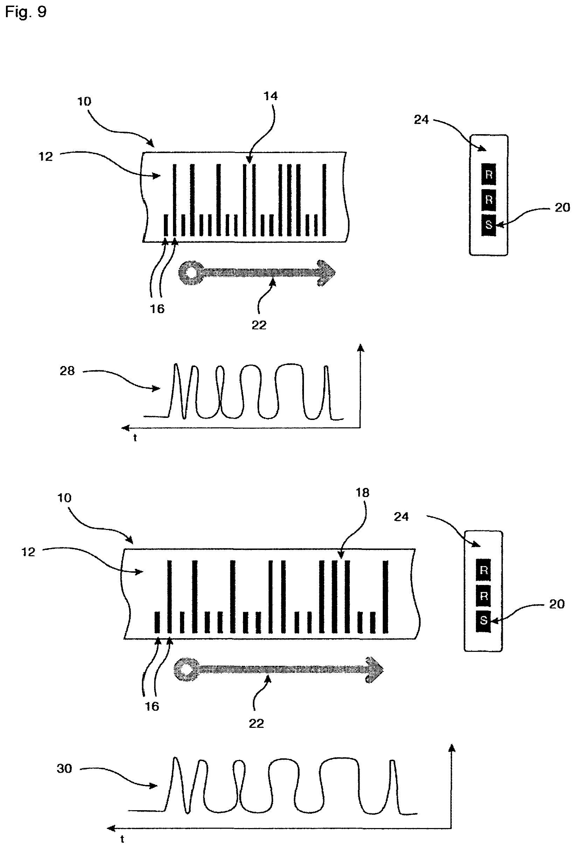

Figur 9 zeigt die Änderungen des resultierenden zeitabhängigen Signals in Abhängigkeit einer Dehnung der Vorrichtung (10). Figur 9a zeigt eine elektrisch leitfähige Grundstruktur (14), die auf einem bahnförmigen Substratmaterial (12) angeordnet ist. Das bahnförmige Substratmaterial (12) bewegt sich relativ (vgl. Pfeil 22) zum kapazitiven Flächensensor (24). Beim Auslesen dieser elektrisch leitfähigen Grundstruktur (14) mittels kapazitivem Flächensensor (24) wird ein zeitabhängiges Referenzsignal (28) erzeugt.
Figur 9b zeigt das bahnförmige Substratmaterial (12), nachdem es gedehnt wurde. Die durch die Dehnung erhaltene resultierende elektrisch leitfähige Schicht (18) erzeugt ein verändertes zeitabhängiges Signal (30) auf dem kapazitiven Flächensensor (24). Bei gleicher Bahngeschwindigkeit sind die zeitlichen Abstände der Maxima des resultierenden zeitabhängigen Signals (30) größer als beim zeitabhängigen Referenzsignal (28). Durch die Auswertung dieser Daten kann bei bekannter Bahngeschwindigkeit die Dehnung des Substratmaterials (12) bestimmt werden. Umgekehrt ist es auch möglich, bei bekannter Dehnung des Substratmaterials (12) die Bahngeschwindigkeit zu bestimmen.

### Bezugszeichenliste

- 10: Vorrichtung
- 12: Substrat
- 14: elektrisch leitfähige Grundstruktur
- 16: Einzelelemente
- 18: resultierende elektrisch leitfähige Struktur
- 20: Eingabemittel
- 22: Relativbewegung
- 24: kapazitiver Flächensensor
- 26: Wirkkontakt
- 28: zeitabhängiges Referenzsignal
- 30: resultierendes zeitabhängiges Signal
- 40: nachträglich appliziertes leitfähiges Material
- 42: Inkjetdrucker
- 44: Lackschicht oder Laminat
- 50: Unterbrechungen in der elektrisch leitfähigen Grundstruktur
- 52: Deckstruktur
- 60: Perforation
- 70: elektrisch leitfähige Struktur

## Patentansprüche

1. Vorrichtung (10) zur Erzeugung eines veränderbaren zeitabhängigen Signals (28, 30) auf einem kapazitiven Flächensensor (24) umfassend mindestens eine elektrisch leitfähige Struktur (70)
**dadurch gekennzeichnet, dass**
die elektrisch leitfähige Grundstruktur (14) dazu eingerichtet ist, ein erstes Signal (28) auf dem Flächensensor (24) zu erzeugen, und dass durch eine nachträgliche Veränderung der elektrisch leitfähigen Grundstruktur (14) eine zweite elektrisch leitfähige Struktur (18) erhalten wird, die dazu eingerichtet ist, ein zweites Signal (30) auf dem Flächensensor (24) zu erzeugen, wobei sich das erste Signal (28) und das zweite Signal (30) in ihrer Wirkung auf dem Flächensensor (24) unterscheiden, wobei die Erzeugung des veränderbaren zeitabhängigen Signals (28, 30) auf dem kapazitiven Flächensensor (24) durch Modulation einer dynamischen Eingabe durch die elektrisch leitfähige Struktur (70) der Vorrichtung (10) erfolgt.

2. Vorrichtung (10) nach Anspruch 1
**dadurch gekennzeichnet, dass**
die nachträgliche Veränderung der elektrisch leitfähigen Grundstruktur (14) realisiert wird durch eine oder mehrere der folgenden Maßnahmen:
a) nachträgliches lokales Auftragen von elektrisch leitfähigem Material (40),
b) nachträgliches selektives Entfernen von elektrisch leitfähigem Material (40),
c) nachträgliche Kombination von mindestens zwei elektrisch leitfähigen Grundstrukturen (14) miteinander,
d) nachträgliches Teilen/Trennen der elektrisch leitfähigen Grundstruktur (14) und/oder
e) nachträgliche Dimensionsveränderung der elektrisch leitfähigen Grundstruktur (14).

3. Vorrichtung (10) nach Anspruch 1 oder 2
**dadurch gekennzeichnet, dass**
die elektrisch leitfähige Struktur (70) mit dem kapazitiven Flächensensor (24) mindestens teilweise in einem Wirkkontakt (26) steht.

4. Vorrichtung (10) nach Anspruch 2
**dadurch gekennzeichnet, dass**
das lokale Auftragen von elektrisch leitfähigem Material (40) mittels eines Stiftes mit elektrisch leitfähiger Tinte oder durch Bedrucken mittels elektrisch leitfähiger Tinte erfolgt.

5. Vorrichtung (10) nach Anspruch 2
**dadurch gekennzeichnet, dass**
durch das lokale Auftragen von elektrisch leitfähigem Material (40) mittels eines Stiftes mit elektrisch leitfähiger Tinte oder durch Bedrucken mittels elektrisch leitfähiger Tinte im Inkjetdruckverfahren eine Regionalisierung oder Serialisierung der elektrisch leitfähigen Grundstruktur (14) erfolgt.

6. Vorrichtung (10) nach Anspruch 2
**dadurch gekennzeichnet, dass**
das selektive Entfernen von elektrisch leitfähigem Material mittels Laser, Perforieren, Lochen, Stanzen, Abziehen oder mechanischem Abrieb erfolgt und
a) die Elemente (16) der elektrisch leitfähigen Grundstruktur (14) mindestens teilweise entfernt oder unterbrochen werden und/oder
b) Elemente (16) der elektrisch leitfähigen Grundstruktur (14) durch das Entfernen einer elektrisch leitfähigen Deckschicht freigelegt werden.

7. Vorrichtung (10) nach Anspruch 2
**dadurch gekennzeichnet, dass**
die Kombination von mindestens zwei elektrisch leitfähigen Grundstrukturen (14) durch eine oder mehrere der folgenden Maßnahmen erfolgt:
a) irreversible Verfahren, wie Kleben, Tackern und/oder Verschweißen, oder
b) reversible Verfahren, wie formschlüssige Verbindung, Puzzle, Kleben mit wieder ablösbarem Kleber und/oder Zusammenfügen.

8. Vorrichtung (10) nach Anspruch 2
**dadurch gekennzeichnet, dass**
das Teilen oder Trennen der elektrisch leitfähigen Grundstruktur (14) durch
a) das Öffnen einer Verpackung oder das Abreißen eines Kontrollstreifens oder
b) das Abziehen eines Etikettes oder eines Labels, welches sich beim Abziehen in mindestens zwei Teile teilt oder de-laminiert,
erfolgt.

9. Vorrichtung (10) nach Anspruch 2
**dadurch gekennzeichnet, dass**
die Dimensionsveränderung der elektrisch leitfähigen Grundstruktur (10) durch die Einwirkung von Umgebungseinflüssen, wie mechanische Belastung, Zug, Druck, Temperatureinwirkung oder Feuchteeinwirkung verursacht wird.

10. Vorrichtung (10) nach Anspruch 2, 4 oder 5
**dadurch gekennzeichnet, dass**
zum lokalen Auftragen einer zusätzlichen elektrisch leitfähigen Schicht (18, 40) Materialien mit zeitlich veränderlichen Eigenschaften verwendet werden.

11. Vorrichtung (10) nach Anspruch einem oder mehreren der vorhergehenden Ansprüche
**dadurch gekennzeichnet, dass**
die elektrisch leitfähige Struktur (70) mindestens zwei Einzelelemente (16) umfasst.

12. Vorrichtung (10) nach Anspruch 11
**dadurch gekennzeichnet, dass**
die Einzelelemente (16) der elektrisch leitfähigen Struktur (70) galvanisch getrennt voneinander vorliegen.

13. Vorrichtung (10) nach einem oder mehreren der vorhergehenden Ansprüche
**dadurch gekennzeichnet, dass**
das zeitabhängige Signal (28, 30) bezüglich Position, Geschwindigkeit, Richtung, Form, Unterbrechung des Signals, Frequenz und/oder Signalstärke modulierbar ist.

14. Vorrichtung (10) nach einem oder mehreren der Ansprüche 11 bis 13
**dadurch gekennzeichnet, dass**
die Einzelelemente (16) der elektrisch leitfähigen Struktur (70) hinsichtlich Größe, Abstand und Form so dimensioniert sind, dass zu jedem Zeitpunkt der dynamischen Eingabe mindestens zwei Einzelelemente (16) mindestens teilweise mit dem Eingabemittel (20) in Wirkkontakt (26) stehen.

15. Vorrichtung (10) nach einem oder mehreren der Ansprüche 11 bis 14
**dadurch gekennzeichnet, dass**
ein Verlauf des zeitabhängigen Signals (28, 30) auf dem kapazitiven Flächcnsensor (24) durch Anordnung, Größe, Abstand und/oder Form der Einzelelemente der elektrisch leitfähigen Struktur (70) und/oder durch die Richtung und/oder Geschwindigkeit der dynamischen Eingabe bestimmbar ist.

16. Verwendung der Vorrichtung (10) zur Erzeugung eines zeitabhängigen Signals (28, 30) auf einem kapazitiven Flächensensor (24) nach einem oder mehreren der Ansprüche 1 bis 15
**dadurch gekennzeichnet, dass**
eine elektrisch leitfähige Struktur (70) der Vorrichtung (10) mit dem kapazitiven Flächensensor (24) mindestens teilweise in einem Wirkkontakt (26) steht, wobei die Erzeugung des zeitabhängigen Signals (28, 30) auf dem kapazitiven Flächensensor (24) durch Modulation einer dynamischen Eingabe durch die Vorrichtung (10) erfolgt.

17. Elektrisch leitfähige Struktur (70) für eine Vorrichtung nach einem oder mehreren der Ansprüche 1 bis 15.

## Geänderte Patentansprüche

### Geänderte Patentansprüche gemäss Regel 137(2) EPÜ.

1. System zur Erzeugung eines veränderbaren zeitabhängigen Signals auf einem kapazitiven Flächensensor (24) wobei das System eine Vorrichtung (10), den kapazitiven Flächensensor (24) und ein Eingabemittel (20) umfasst, wobei die Vorrichtung (10) eine erste elektrisch leitfähige Struktur (14) und eine zweite elektrisch leitfähige Struktur (18) umfasst.
**dadurch gekennzeichnet, dass**
die erste elektrisch leitfähige Struktur 14) dazu eingerichtet ist, ein erstes Signal (28) auf dem kapazitiven Flächensensor (24) festzulegen, und
die zweite elektrisch leitfähige Struktur (18) dazu eingerichtet ist, ein zweites Signal (30) auf dem kapazitiven Flächensensor (24) festzulegen, wobei die zweite elektrisch leitfähige Struktur (18) durch eine Veränderung der ersten elektrisch leitfähigen Struktur (14) erzeugbar ist, wobei die erste elektrisch leitfähige Struktur (14) dazu eingerichtet ist, eine erste Modulation einer dynamischen Eingabe (22) zu bewirken, und die zweite elektrisch leitfähige Struktur (18) dazu eingerichtet ist, eine zweite Modulation einer dynamischen Eingabe (22) zu bewirken, wobei die dynamische Eingabe (22) mit einem Eingabemittel (20) auf der Vorrichtung (10) erfolgt.

2. System nach Anspruch 1
**dadurch gekennzeichnet, dass** die erste elektrisch leitfähige Struktur (14) oder die zweite elektrisch leitfähige Struktur (18) mit dem kapazitiven Flächensensor (24) mindestens teilweise in einem Wirkkontakt (26) steht. System nach Anspruch 1 oder 2
**dadurch gekennzeichnet, dass**
die dynamische Eingabe (22) mit

3. einem Eingabemittel (20) auf der ersten elektrisch leitfähigen Struktur (14) und/oder der zweiten elektrisch leitfähigen Struktur (18) erfolgt.

4. System nach einem oder mehreren der vorhergehenden Ansprüche
**dadurch gekennzeichnet, dass**
die Veränderung der ersten elektrisch leitfähigen Struktur (14) mit einem Stift bewirkbar ist.

5. System nach einem oder mehreren der vorhergehenden Ansprüche
**dadurch gekennzeichnet, dass**
die Veränderung der ersten elektrisch leitfähigen Struktur (14) bewirkbar ist durch eine oder mehrere der folgenden Maßnahmen:
a) Auftragen von elektrisch leitfähigem Material (40),
b) selektives Entfernen eines Teils der ersten elektrisch leitfähigen Struktur (14),
c) Auftragen eines Materials, das dazu eingerichtet ist, Eigenschaften, insbesondere die elektrische Leitfähigkeit, der ersten elektrisch leitfähigen
Struktur (14) zu verändern.

6. System nach einem oder mehreren der vorhergehenden Ansprüche
**dadurch gekennzeichnet, dass**
eine Individualisierung der Vorrichtung (10) durch eine oder mehrere der folgenden Maßnahmen bewirkbar ist:
a) Auftragen von elektrisch leitfähigem Material (40) mit einem Stift mit elektrisch leitfähiger Tinte.
b) Bedrucken mit elektrisch leitfähigem Material (40) im Inkjetdruckverfahren,
c) Selektives Entfernen eines Teils der ersten elektrisch leitfähigen Struktur (14),
d) Auftragen eines Materials, das dazu eingerichtet ist. Eigenschaften, insbesondere die elektrische Leitfähigkeit, der ersten elektrisch leitfähigen Struktur (14) zu verändern.

7. Verwendung eines Stiftes zur Veränderung einer elektrisch leitfähigen Struktur (14) auf einer Vorrichtung (10)

8. Verfahren zur Erzeugung eines veränderbaren zeitabhängigen Signals auf einem kapazitiven Flächensensor (24),
**umfassend die folgenden Schritte:**
a) Bereitstellung einer Vorrichtung (10) umfassend eine erste elektrisch leitfähige Struktur (14),
b) Veränderung der ersten elektrisch leitfähigen Struktur (14), wodurch eine zweite elektrisch leitfähige Struktur (18) erhalten wird.
c) Auflegen der Vorrichtung (10) auf den kapazitiven Flächensensor (24),
d) Erzeugung eines zweiten Signals (30) auf dem kapazitiven Flächensensor (24) durch eine dynamischen Eingabe (22) mit einem Eingabemittel (20) und eine zweite Modulation der dynamischen Eingabe (22) und Übertragung auf den kapazitiven Flächensensor (24) durch die zweite elektrisch leitfähige Struktur (18).

9. Verfahren nach Anspruch 8
**zusätzlich umfassend die folgenden Schritte** zwischen den Schritten a) und b) des Anspruchs 8
a1) Auflegen der Vorrichtung (10) auf den kapazitiven Flächensensor (24),
a2) Erzeugung eines ersten Signals (28) auf dem kapazitiven Flächensensor (24) durch eine dynamischen Eingabe (22) mit einem Eingabemittel (20) und eine erste Modulation der dynamischen Eingabe (22) und Übertragung auf den kapazitiven Flächensensor (24) durch die erste elektrisch leitfähige Struktur (14).

10. Verfahren nach Anspruch 8 oder 9,
**dadurch gekennzeichnet, dass**
das erste Signal (28) durch die erste elektrisch leitfähige Struktur (14) festgelegt wird und das zweite Signal (30) durch die zweite elektrisch leitfähige Struktur (18) festgelegt wird.

11. System nach einem oder mehreren der Ansprüche 1 bis 6
**dadurch gekennzeichnet, dass**
ein Teilen oder Trennen der elektrisch leitfähigen Grundstruktur (14) durch
a) das Öffnen einer Verpackung oder das Abreißen eines Kontrollstreifens oder
b) das Abziehen eines Etikettes oder eines Labels, welches sich beim Abziehen in mindestens zwei Teile teilt oder de-laminiert, bewirkbar ist.

12. System nach einem oder mehreren der Ansprüche 5 oder 6
**dadurch gekennzeichnet, dass**
das elektrisch leitfähige Material (40) ein Material mit einer zeitlich veränderlichen elektrischen Leitfähigkeit umfasst.

13. System nach Anspruch einem oder mehreren der Ansprüche 1 bis 6 und 11 und 12
**dadurch gekennzeichnet, dass**
die erste elektrisch leitfähige Struktur (14) und/oder die zweite elektrisch leitfähige Struktur (18) jeweils mindestens zwei Einzelelemente (16) umfasst.

14. System nach Anspruch 13
**dadurch gekennzeichnet, dass**
die Einzelelemente (16) der elektrisch leitfähigen Strukturen (14 und/oder 18) galvanisch getrennt voneinander vorliegen.
System nach Anspruch 13 oder 14
**dadurch gekennzeichnet, dass**
die Einzelelemente (16) der elektrisch leitfähigen

15. Strukturen (14 und/oder 18) hinsichtlich Größe, Abstand und Form so dimensioniert sind, dass zu jedem Zeitpunkt der dynamischen Eingabe (22) mindestens zwei Einzelelemente (16) mindestens teilweise mit einem Eingabemittel (20) in Wirkkontakt stehen, wobei die dynamische Eingabe (22) mit dem Eingabemittel (20) bewirkt wird.

16. System nach einem oder mehreren der Ansprüche 13 bis 15
**dadurch gekennzeichnet, dass**
ein Verlauf des zeitabhängigen Signals auf dem kapazitiven Flächensensor (24) durch Anordnung, elektrische Leitfähigkeit, Größe, Abstand und/oder Form der Einzelelemente (16) der elektrisch leitfähigen Strukturen (14 und/oder 18) und/oder durch die Richtung und/oder Geschwindigkeit der dynamischen Eingabe (22) bestimmbar ist.

17. System nach einem oder mehreren der Ansprüche 1 bis 6 oder 11 bis 16
**dadurch gekennzeichnet, dass**
die dynamische Eingabe (22) bezüglich Position, Geschwindigkeit, Richtung, Form. Unterbrechung des Signals, Freguenz und/oder Signalstärke modulierbar ist.

18. System nach einem oder mehreren der Ansprüche 1 bis 6 oder 11 bis 17
**dadurch gekennzeichnet, dass**
die erste elektrisch leitfähige Struktur (14) und/oder die zweite elektrisch leitfähige Struktur (18) auf einem elektrisch nicht leitfähigen Substrat (12) vorliegt.

19. Vorrichtung (10) umfassend eine erste elektrisch leitfähige Struktur (14) und eine zweite elektrisch leitfähige Struktur (18)
**dadurch gekennzeichnet, dass**
die erste elektrisch leitfähige Struktur (14) dazu eingerichtet ist, ein erstes Signal (28) auf dem kapazitiven Flächensensor (24) festzulegen, und die zweite elektrisch leitfähige Struktur (18) dazu eingerichtet ist, ein zweites Signal (30) auf dem kapazitiven Flächensensor (24) zu festzulegen, wobei die zweite elektrisch leitfähige Struktur (18) durch eine Veränderung der ersten elektrisch leitfähigen Struktur (14) erzeugbar ist.
